(19)

Europäisches
Patentamt

European
Patent Office

Office européen
des brevets

(11) **EP 4 633 220 A1**

(12) **EUROPEAN PATENT APPLICATION**
published in accordance with Art. 153(4) EPC

(43) Date of publication:
**15.10.2025 Bulletin 2025/42**

(21) Application number: **23910547.1**

(22) Date of filing: **25.12.2023**

(51) International Patent Classification (IPC):
***H04W 16/28*** (2009.01)

(52) Cooperative Patent Classification (CPC):
**H04B 7/145; H04W 16/28; H04W 72/044;**
**H04W 72/0446; H04W 72/0453; H04W 72/231;**
**H04W 72/232**

(86) International application number:
**PCT/CN2023/141718**

(87) International publication number:
**WO 2024/140622 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **30.12.2022 CN 202211739370**

(71) Applicant: **Huawei Technologies Co., Ltd.**
**Shenzhen, Guangdong 518129 (CN)**

(72) Inventors:
• **WU, Yuandong**
**Shenzhen, Guangdong 518129 (CN)**
• **GAO, Xinyu**
**Shenzhen, Guangdong 518129 (CN)**
• **LIU, Kunpeng**
**Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **COMMUNICATION METHOD AND APPARATUS**

(57)    This application pertains to the field of communication technologies, and provides a communication method and apparatus, to enhance a signal coverage capability of a network device. **In** the method, a first network device may configure a correspondence between time-frequency resources of M sets of broadcast signaling and N pieces of beam information, to indicate a second network device to adjust a coverage area of the first network device on a time-frequency resource of each set of broadcast signaling by using one piece of beam information corresponding to the time-frequency resource. This can enhance a signal coverage capability of the first network device, so that a terminal device in a signal coverage hole can access the first network device.

```
┌─────────────────┐              ┌─────────────────┐
│  First network  │              │ Second network  │
│     device      │              │     device      │
└─────────────────┘              └─────────────────┘
┌─────────────────────┐
│ S501: The first network │
│ device obtains configuration │
│     information     │
└─────────────────────┘
        S502: The first network device
        sends the configuration information
        to the second network device

                          ┌──────────────────────────┐
                          │ S503: The second network device │
                          │ determines corresponding N pieces of │
                          │ beam information on M time-frequency │
                          │ resources based on the configuration │
                          │         information          │
                          └──────────────────────────┘
```

FIG. 5

**Description**

This application claims priority to Chinese Patent Application No. 202211739370.8, filed with the China National Intellectual Property Administration on December 30, 2022 and entitled "COMMUNICATION METHOD AND APPARATUS", which is incorporated herein by reference in its entirety.

**TECHNICAL FIELD**

This application relates to the communication field, and in particular, to a communication method and apparatus.

**BACKGROUND**

Currently, a terminal device may access a network device by receiving an SSB beam sent by the network device. The network device periodically performs beam sweeping. In other words, the network device may send a beam in one direction at a moment, and send beams in different directions at a plurality of different moments, to cover a cell in each direction. In other words, terminals located in different areas in the cell may receive several beams in the beams sent by the network device in the different directions, to implement access. The beams in the different directions may meet access requirements of the terminal devices in the different areas in the cell.

However, because a quantity of beams and a beam coverage area are limited, some terminal devices are located in a beam coverage hole. Consequently, a signal coverage capability of the network device is weak.

**SUMMARY**

Embodiments of this application provide a communication method and apparatus, to enhance a signal coverage capability of a network device.

To achieve the foregoing objective, this application uses the following technical solutions.

According to a first aspect, a communication method is provided. The method includes: A first network device obtains configuration information, and sends the configuration information to a second network device. The configuration information indicates a correspondence between time-frequency resources of M sets of broadcast signaling and N pieces of beam information, and M and N are integers greater than 1; and a time-frequency resource of each set of broadcast signaling in the time-frequency resources of the M sets of broadcast signaling corresponds to one of the N pieces of beam information.

It can be learned from the method according to the first aspect that the first network device configures the correspondence between the time-frequency resources of the M sets of broadcast signaling and the N pieces of beam information, to indicate the second network device to adjust a coverage area of the first network device on the time-frequency resource of each set of broadcast signaling by using one piece of beam information corresponding to the time-frequency resource, to enhance a coverage capability of the first network device.

In a possible design solution, any one of the M sets of broadcast signaling includes at least one piece of signaling, and the at least one piece of signaling is signaling for providing an access service for a terminal device. It may be understood that, because the M sets of broadcast signaling correspond to the N pieces of beam information, the N pieces of beam information may reflect the M sets of broadcast signaling to a maximum of N different areas, so that all terminal devices in the N different areas can access the first network device by receiving broadcast signaling, to enhance a signal coverage capability of the first network device.

In a possible design solution, the configuration information includes time-frequency resource information, and the time-frequency resource information indicates the time-frequency resources of the M sets of broadcast signaling. The second network device may directly and accurately obtain a specific time-frequency resource of each set of broadcast signaling by using the time-frequency resource information, so that each set of broadcast signaling can be reflected to a corresponding area by using corresponding beam information on the time-frequency resource of each set of broadcast signaling, and all terminal devices in these areas can implement access.

In a possible design solution, the configuration information includes time-frequency resource information and time-frequency resource offset information, where the time-frequency resource information indicates a time-frequency resource of a $t^{th}$ set of broadcast signaling in the M sets of broadcast signaling; and the time-frequency resource offset information indicates a time-frequency offset of a time-frequency resource of a $u^{th}$ set of broadcast signaling in the M sets of broadcast signaling in comparison with the time-frequency resource of the $t^{th}$ set of broadcast signaling, t and u are any integers from 1 to M, and t and u are different. In other words, the second network device may directly indicate a time-frequency resource of a part of the M sets of broadcast signaling by using the time-frequency resource information, and then indicate a time-frequency resource of a remaining set of broadcast signaling in the M sets of broadcast signaling by using the time-frequency resource offset information. In comparison with the foregoing method for directly indicating the time-frequency resource of each set of broadcast signaling, communication overheads can be reduced.

In a possible design solution, the configuration information includes time-frequency resource information and time-frequency resource offset information, where the time-frequency resource information indicates a time-frequency resource of a $p^{th}$ piece of signaling in an $x^{th}$ set of broadcast signaling in the M sets of broadcast signaling; and the time-frequency resource offset information indicates a time-frequency offset of a time-frequency resource of a $q^{th}$ piece of broadcast signaling in the $x^{th}$ set of broadcast signaling in comparison with the time-frequency resource of the $p^{th}$ piece of broadcast signaling, x is any integer from 1 to M, and p and q are integers with different values. In other words, the second network device may directly indicate a time-frequency resource of a part of signaling in the $x^{th}$ set of broadcast signaling by using the time-frequency resource information, and then indicate a time-frequency resource of remaining signaling in the $x^{th}$ set of broadcast signaling by using the time-frequency resource offset information. In comparison with the foregoing method for directly indicating the time-frequency resource of each set of broadcast signaling, communication overheads can be reduced.

Optionally, the time-frequency resource information includes at least one of the following: a bitmap or an index of at least one piece of signaling in the M sets of broadcast signaling. In other words, the time-frequency resource information may be used to obtain values of different bits in the bitmap, to obtain a precise time-frequency resource. The time-frequency resource information may alternatively be indicated by using an index of at least one piece of signaling in each set of broadcast signaling. For example, a synchronization information block SSB index, SSB index is associated with a time-frequency resource corresponding to a beam pointing to the second network device. The second network device may obtain a time-frequency resource of an SSB by using the SSB index, to accurately indicate a time-frequency resource corresponding to each piece of signaling.

Optionally, the time-frequency resource offset information includes at least one of the following: a bitmap or an index of at least one piece of signaling in the M sets of broadcast signaling. In other words, the time-frequency resource information may be used to obtain values of different bits in the bitmap, to obtain a precise time-frequency resource offset position. The time-frequency resource offset information may alternatively be indicated by using an index of at least one piece of signaling in each set of broadcast signaling, and then the index of the at least one piece of signaling in each set of broadcast signaling indicates information about a set of broadcast signaling relative to another set of broadcast signaling, or information about one piece of signaling that is in a set of broadcast signaling and that is relative to another piece of signaling in the set of broadcast signaling, to ensure accuracy of a time-frequency resource.

In a possible design solution, any one of the M sets of broadcast signaling includes at least one of the following: a synchronization information block SSB, a system information block SIB, a master information block MIB, a bearer control resource set CORESET 0, a message Msg1, a message Msg2, a message Msg3, a message Msg4, or paging Paging, that is, any one of the M sets of broadcast signaling is carried in existing signaling to reduce implementation difficulty, or may be carried in new signaling to improve implementation flexibility. This is not limited.

In a possible design solution, the N pieces of beam information are associated with at least one of the following: a position of the first network device, a position of the second network device, panel information of the first network device, or panel information of the second network device. It may be understood that, when the position and the panel information of the first network device are determined, if a plurality of second network devices are at a same position and have same panel information, the first network device needs to serve a same area. In this case, reflection weights of the plurality of second network devices may be the same. In other words, if it is determined that the plurality of second network devices are at the same position, it may be determined that the plurality of second network devices use same beam information, so that a process of selecting the beam information by the second network device can be reduced, thereby improving communication efficiency.

Optionally, the method according to the first aspect further includes: The first network device obtains energy that is of a downlink signal and that is fed back by the terminal device, and when the energy of the downlink signal is less than a preset energy threshold, the first network device indicates the second network device to use second beam information in the N pieces of beam information. The downlink signal is a signal received by the terminal device when the second network device uses first beam information in the N pieces of beam information, and the downlink signal is used by the terminal device to perform measurement and/or access. The second beam information is different from the first beam information. It may be understood that the first network device may receive the energy of the downlink signal reported by the terminal device. When the energy of the received downlink signal is less than the preset energy threshold, the downlink signal cannot meet requirements of performing channel measurement and access by the terminal device. In this case, the first network device may indicate the second network device to update the first beam information, to dynamically adjust beam information, and improve efficiency and reliability of accessing the first network device by the terminal device.

Optionally, the downlink signal is carried in at least one of the following: a synchronization signal block SSB or a signaling state information-reference signal CSI-RS, that is, the downlink signal is carried in an existing information element, to reduce implementation difficulty, or may be carried in a new information element, to improve implementation flexibility. This is not limited.

Optionally, the method according to the first aspect further includes: The first network device obtains, in a preset time interval, a quantity of uplink signals received from the terminal device; and when the quantity of uplink signals is less than a preset signal quantity threshold, the first network device indicates the second network device to use second beam information in the N pieces of beam information. The uplink signal is a signal received by a first network when the second network device uses first beam information in the N pieces of beam information, and the uplink signal is used by the terminal device to request to access the first network device. The second beam information is different from the first beam information. It may be understood that, if quality of a signal sent or reflected by the second network device is not good, a case in which the terminal device normally accesses the first network device is affected, and consequently, the terminal device that should normally access the first network device cannot access the first network device, resulting in a case in which a quantity of terminal devices that access the first network device as a whole is reduced. In other words, the quantity of uplink signals received by the first network device may reflect the quality of the signal sent or reflected by the second network device. Therefore, when the quantity of uplink signals received by the first network device is less than the preset signal quantity threshold, the first network device may indicate the second network device to update the first beam information, to meet an access requirement of the terminal device, and improve efficiency and reliability of accessing the first network device by the terminal device.

Optionally, the method according to the first aspect further includes: The first network device obtains energy of an uplink signal received from the terminal device, and when the energy of the uplink signal is less than a preset energy threshold, the first network device indicates the second network device to use second beam information in the N pieces of beam information. The uplink signal is a signal received by the first network device when the second network device uses first beam information in the N pieces of beam information, and the uplink signal is used by the terminal device to request to access the first network device. The second beam information is different from the first beam information. It may be understood that, if quality of a signal reflected by the second network device is not good, a case in which the terminal normally accesses the first network device is affected, and consequently, the terminal that should normally access the first network device cannot access the first network device. In other words, the energy of the uplink signal received by the first network device may reflect the quality of the signal sent or reflected by the second network device. Therefore, when the quantity of uplink signals received by the first network device is less than the preset signal quantity threshold, the first network device may indicate the second network device to update the first beam information, to meet an access requirement of the terminal device, and improve efficiency and reliability of accessing the first network device by the terminal device.

Optionally, the uplink signal is carried in at least one of the following: a physical random access channel PRACH, a reference signal SRS, or a physical uplink shared channel PUSCH, that is, the uplink signal is carried in an existing information element or channel to reduce implementation difficulty, or may be carried in a new information element or channel to improve implementation flexibility. This is not limited.

Optionally, the method according to the first aspect further includes: The first network device sends power scaling information to the terminal device. The power scaling information indicates, to the terminal device, an attenuation degree of transmit power of a data channel that has same time domain resources as the M sets of broadcast signaling, and the data channel is a channel for data transmission after the terminal device accesses the first network device. In other words, the terminal device may ensure, based on the power scaling information, normal receiving and demodulation of a downlink signal, to avoid incorrect demodulation or misdemodulation.

Optionally, the power scaling information is determined based on frequency domain bandwidth occupied by the M sets of broadcast signaling and frequency domain bandwidth occupied by the data channel that has the same time domain resources as the M sets of broadcast signaling. It may be understood that the power scaling information takes effect on all a plurality of time-frequency resources. After the power scaling information is associated with the frequency domain bandwidth occupied by the M sets of broadcast signaling and the frequency domain bandwidth occupied by the data channel that has the same time domain resources as the M sets of broadcast signaling, time domain resources that have a same bandwidth relationship may correspond to same power scaling information. In this case, for the time domain resources that have the same bandwidth relationship, the first network device needs to feed back only one piece of power scaling information to a second terminal device, and does not need to separately notify the second terminal device on each time domain resource, to reduce communication overheads.

In a possible design solution, the configuration information may be carried in at least one of the following: downlink control information DCI, radio control RRC information, a medium access control-control element MAC-CE, or a physical downlink shared channel PDSCH, that is, the configuration information is carried in an existing information element or channel to reduce implementation difficulty, or may be carried in a new information element or channel to improve implementation flexibility. This is not limited.

According to a second aspect, a communication method is provided. The method includes: A second network device receives configuration information from a first network device, and determines corresponding N pieces of beam information on M time-frequency resources based on the configuration information. The configuration information indicates a correspondence between the time-frequency resources of the M sets of broadcast signaling and N pieces of beam information, and M and N are integers greater than 1; and a time-frequency resource of each set of broadcast signaling in the time-frequency resources of the M sets of broadcast signaling corresponds to one of the N pieces of beam information.

In a possible design solution, any one of the M sets of broadcast signaling includes at least one piece of signaling, and the at least one piece of signaling is signaling for providing an access service for a terminal device.

In a possible design solution, the configuration information includes time-frequency resource information, and the time-frequency resource information indicates the time-frequency resources of the M sets of broadcast signaling.

In a possible design solution, the configuration information includes time-frequency resource information and time-frequency resource offset information, where the time-frequency resource information indicates a time-frequency resource of a $t^{th}$ set of broadcast signaling in the M sets of broadcast signaling; and the time-frequency resource offset information indicates a time-frequency offset of a time-frequency resource of a $u^{th}$ set of broadcast signaling in the M sets of broadcast signaling in comparison with the time-frequency resource of the $t^{th}$ set of broadcast signaling, t and u are any integers from 1 to M, and t and u are different.

In a possible design solution, the configuration information includes time-frequency resource information and time-frequency resource offset information, where the time-frequency resource information indicates a time-frequency resource of a $p^{th}$ piece of signaling in an $x^{th}$ set of broadcast signaling in the M sets of broadcast signaling; and the time-frequency resource offset information indicates a time-frequency offset of a time-frequency resource of a $q^{th}$ piece of broadcast signaling in the $x^{th}$ set of broadcast signaling in comparison with the time-frequency resource of the $p^{th}$ piece of broadcast signaling, x is any integer from 1 to M, and p and q are integers with different values.

Optionally, the time-frequency resource information includes at least one of the following: a bitmap or an index of at least one piece of signaling in the M sets of broadcast signaling.

Optionally, the time-frequency resource offset information includes at least one of the following: a bitmap or an index of at least one piece of signaling in the M sets of broadcast signaling.

In a possible design solution, any one of the M sets of broadcast signaling includes at least one of the following: a synchronization information block SSB, a system information block SIB, a master information block MIB, a bearer control resource set CORESET 0, a message Msg1, a message Msg2, a message Msg3, a message Msg4, or paging Paging.

In a possible design solution, the N pieces of beam information are associated with at least one of the following: a position of the first network device, a position of the second network device, panel information of the first network device, or panel information of the second network device.

In a possible design solution, the configuration information may be carried in at least one of the following: downlink control information DCI, radio control RRC information, a medium access control-control element MAC-CE, or a physical downlink shared channel PDSCH.

In addition, for technical effects of the communication method according to the second aspect, refer to the technical effects of the communication method according to the first aspect. Details are not described herein again.

According to a third aspect, a communication method is provided. The method includes: A terminal device receives power scaling information sent by a first network device, where the power scaling information indicates, to a second terminal device, an attenuation degree of transmit power of a data channel that has same time domain resources as M sets of broadcast signaling, and the data channel is a channel for data transmission after the terminal device accesses the first network device.

According to a fourth aspect, a communication method is provided. The method includes: A first network device obtains configuration information, and sends the configuration information to a second network device; and the second network receives the configuration information, and determines corresponding N pieces of beam information on M time-frequency resources based on the configuration information. The configuration information indicates a correspondence between the time-frequency resources of the M sets of broadcast signaling and the N pieces of beam information, and M and N are integers greater than 1; and a time-frequency resource of each set of broadcast signaling in the time-frequency resources of the M sets of broadcast signaling corresponds to one of the N pieces of beam information.

In a possible design solution, any one of the M sets of broadcast signaling includes at least one piece of signaling, and the at least one piece of signaling is signaling for providing an access service for a terminal device.

In a possible design solution, the configuration information includes time-frequency resource information, and the time-frequency resource information indicates the time-frequency resources of the M sets of broadcast signaling.

In a possible design solution, the configuration information includes time-frequency resource information and time-frequency resource offset information, where the time-frequency resource information indicates a time-frequency resource of a $t^{th}$ set of broadcast signaling in the M sets of broadcast signaling; and the time-frequency resource offset information indicates a time-frequency offset of a time-frequency resource of a $u^{th}$ set of broadcast signaling in the M sets of broadcast signaling in comparison with the time-frequency resource of the $t^{th}$ set of broadcast signaling, t and u are any integers from 1 to M, and t and u are different.

In a possible design solution, the configuration information includes time-frequency resource information and time-frequency resource offset information, where the time-frequency resource information indicates a time-frequency resource of a $p^{th}$ piece of signaling in an $x^{th}$ set of broadcast signaling in the M sets of broadcast signaling; and the time-frequency resource offset information indicates a time-frequency offset of a time-frequency resource of a $q^{th}$ piece of broadcast signaling in the $x^{th}$ set of broadcast signaling in comparison with the time-frequency resource of the $p^{th}$ piece of broadcast signaling, x is any integer from 1 to M, and p and q are integers with different values.

Optionally, the time-frequency resource information includes at least one of the following: a bitmap or an index of at least one piece of signaling in the M sets of broadcast signaling.

Optionally, the time-frequency resource offset information includes at least one of the following: a bitmap or an index of at least one piece of signaling in the M sets of broadcast signaling.

In a possible design solution, any one of the M sets of broadcast signaling includes at least one of the following: a synchronization information block SSB, a system information block SIB, a master information block MIB, a bearer control resource set CORESET 0, a message Msg1, a message Msg2, a message Msg3, a message Msg4, or paging Paging.

In a possible design solution, the N pieces of beam information are associated with at least one of the following: a position of the first network device, a position of the second network device, panel information of the first network device, or panel information of the second network device.

Optionally, the method according to the first aspect further includes: The first network device obtains energy that is of a downlink signal and that is fed back by the terminal device, and when the energy of the downlink signal is less than a preset energy threshold, the first network device indicates the second network device to use second beam information in the N pieces of beam information. The downlink signal is a signal received by the terminal device when the second network device uses first beam information in the N pieces of beam information, and the downlink signal is used by the terminal device to perform measurement and/or access. The second beam information is different from the first beam information.

Optionally, the downlink signal is carried in at least one of the following: a synchronization signal block SSB or a signaling state information-reference signal CSI-RS.

Optionally, the method according to the first aspect further includes: The first network device obtains, in a preset time interval, a quantity of uplink signals received from the terminal device, and when the quantity of uplink signals of the terminal device is less than a preset signal quantity threshold, the first network device indicates second network device to use second beam information in the N pieces of beam information. The uplink signal is a signal received by a first network when the second network device uses first beam information in the N pieces of beam information, and the uplink signal is used by the terminal device to request to access the first network device. The second beam information is different from the first beam information.

Optionally, the method according to the first aspect further includes: The first network device obtains energy of an uplink signal received from the terminal device, and when the energy of the uplink signal is less than a preset energy threshold, the first network device indicates the second network device to use second beam information in the N pieces of beam information. The uplink signal is a signal received by the first network device when the second network device uses first beam information in the N pieces of beam information, and the uplink signal is used by the terminal device to request to access the first network device. The second beam information is different from the first beam information.

Optionally, the uplink signal is carried in at least one of the following: a physical random access channel PRACH, a reference signal SRS, or a physical uplink shared channel PUSCH.

Optionally, the method according to the first aspect further includes: The first network device sends power scaling information to the terminal device. The power scaling information indicates, to the terminal device, an attenuation degree of transmit power of a data channel that has same time domain resources as the M sets of broadcast signaling, and the data channel is a channel for data transmission after the terminal device accesses the first network device.

Optionally, the power scaling information is determined based on frequency domain bandwidth occupied by the M sets of broadcast signaling and frequency domain bandwidth occupied by the data channel that has the same time domain resources as the M sets of broadcast signaling.

In a possible design solution, the configuration information may be carried in at least one of the following: downlink control information DCI, radio control RRC information, a medium access control-control element MAC-CE, or a physical downlink shared channel PDSCH.

According to a fifth aspect, a communication apparatus is provided. The apparatus includes a transceiver module and a processing module. The transceiver module is configured to obtain configuration information. The transceiver module is configured to send the configuration information to a second network device. The configuration information indicates a correspondence between time-frequency resources of M sets of broadcast signaling and N pieces of beam information, and M and N are integers greater than 1; and a time-frequency resource of each set of broadcast signaling in the time-frequency resources of the M sets of broadcast signaling corresponds to one of the N pieces of beam information.

In a possible design solution, any one of the M sets of broadcast signaling includes at least one piece of signaling, and the at least one piece of signaling is signaling for providing an access service for a terminal device.

In a possible design solution, the configuration information includes time-frequency resource information, and the time-frequency resource information indicates the time-frequency resources of the M sets of broadcast signaling.

In a possible design solution, the configuration information includes time-frequency resource information and time-frequency resource offset information, where the time-frequency resource information indicates a time-frequency resource of a t<sup>th</sup> set of broadcast signaling in the M sets of broadcast signaling; and the time-frequency resource offset information indicates a time-frequency offset of a time-frequency resource of a u<sup>th</sup> set of broadcast signaling in the M sets of broadcast signaling in comparison with the time-frequency resource of the t<sup>th</sup> set of broadcast signaling, t and u are any integers from 1 to M, and t and u are different.

In a possible design solution, the configuration information includes time-frequency resource information and time-frequency resource offset information, where the time-frequency resource information indicates a time-frequency resource of a p<sup>th</sup> piece of signaling in an x<sup>th</sup> set of broadcast signaling in the M sets of broadcast signaling; and the time-frequency resource offset information indicates a time-frequency offset of a time-frequency resource of a q<sup>th</sup> piece of broadcast signaling in the x<sup>th</sup> set of broadcast signaling in comparison with the time-frequency resource of the p<sup>th</sup> piece of broadcast signaling, x is any integer from 1 to M, and p and q are integers with different values.

Optionally, the time-frequency resource information includes at least one of the following: a bitmap or an index of at least one piece of signaling in the M sets of broadcast signaling.

Optionally, the time-frequency resource offset information includes at least one of the following: a bitmap or an index of at least one piece of signaling in the M sets of broadcast signaling.

In a possible design solution, any one of the M sets of broadcast signaling includes at least one of the following: a synchronization information block SSB, a system information block SIB, a master information block MIB, a bearer control resource set CORESET 0, a message Msg1, a message Msg2, a message Msg3, a message Msg4, or paging Paging.

In a possible design solution, the N pieces of beam information are associated with at least one of the following: a position of a first network device, a position of the second network device, panel information of the first network device, or panel information of the second network device.

Optionally, the transceiver module is further configured to obtain energy that is of a downlink signal and that is fed back by the terminal device, and when the energy of the downlink signal is less than a preset energy threshold, the first network device indicates the second network device to use second beam information in the N pieces of beam information. The downlink signal is a signal received by the terminal device when the second network device uses first beam information in the N pieces of beam information, and the downlink signal is used by the terminal device to perform measurement and/or access. The second beam information is different from the first beam information.

Optionally, the downlink signal is carried in at least one of the following: a synchronization signal block SSB or a signaling state information-reference signal CSI-RS.

Optionally, the processing module is further configured to obtain, in a preset time interval, a quantity of uplink signals received from the terminal device; and when the quantity of uplink signals of the terminal device is less than a preset signal quantity threshold, the first network device indicates second network device to use second beam information in the N pieces of beam information. The uplink signal is a signal received by a first network when the second network device uses first beam information in the N pieces of beam information, the uplink signal is used to request to access the first network device. The second beam information is different from the first beam information.

Optionally, the processing module is further configured to obtain energy of an uplink signal received from the terminal device, and when the energy of the uplink signal is less than a preset energy threshold, the first network device indicates the second network device to use second beam information in the N pieces of beam information. The uplink signal is a signal received by the first network device when the second network device uses first beam information in the N pieces of beam information, and the uplink signal is used by the terminal device to request to access the first network device. The second beam information is different from the first beam information.

Optionally, the uplink signal is carried in at least one of the following: a physical random access channel PRACH, a reference signal SRS, or a physical uplink shared channel PUSCH.

Optionally, the transceiver module is further configured to send power scaling information to the terminal device. The power scaling information indicates, to the terminal device, an attenuation degree of transmit power of a data channel that has same time domain resources as the M sets of broadcast signaling, and the data channel is a channel for data transmission after the terminal device accesses the first network device.

The power scaling information is determined based on frequency domain bandwidth occupied by the M sets of broadcast signaling and frequency domain bandwidth occupied by the data channel that has the same time domain resources as the M sets of broadcast signaling.

In a possible design solution, the configuration information may be carried in at least one of the following: downlink control information DCI, radio control RRC information, a medium access control-control element MAC-CE, or a physical downlink shared channel PDSCH.

Optionally, the transceiver module may include a sending module and a receiving module. The sending module is configured to implement a sending function of the communication apparatus according to the fifth aspect, and the receiving module is configured to implement a receiving function of the communication apparatus according to the fifth aspect.

Optionally, the transceiver module may be a transceiver, and the processing module may be a processor.

Optionally, the communication apparatus according to the fifth aspect may further include a storage module. The storage module stores a program or instructions. When the processing module executes the program or the instructions, the communication apparatus is enabled to perform the communication method according to the second aspect.

It may be understood that the communication apparatus according to the fifth aspect may be a network apparatus, for example, a network device, may be a chip (system) or another part or component that may be disposed in the network apparatus, or may be an apparatus including the network apparatus. This is not limited in this application. It may be understood that, if the communication apparatus is a chip (system) disposed in a device, the transceiver module may be an input/output interface of the chip (system), for example, an input/output circuit or a pin.

In addition, for technical effects of the communication apparatus according to the fifth aspect, refer to the technical effects of the communication method according to the first aspect. Details are not described herein again.

According to a sixth aspect, a communication apparatus is provided. The communication apparatus includes a transceiver module and a processing module. The transceiver module is configured to receive configuration information from a first network device. The processing module is configured to determine corresponding N pieces of beam information on M time-frequency resources based on the configuration information. The configuration information indicates a correspondence between the time-frequency resource positions of the M sets of downlink broadcast signaling and N pieces of beam information, and M and N are integers greater than 1; and a time-frequency resource position of each set downlink broadcast signaling in the time-frequency resource positions of the M sets of downlink broadcast signaling corresponds to one of the N pieces of beam information.

In a possible design solution, any one of the M sets of downlink broadcast signaling includes at least one piece of signaling, and the at least one piece of signaling is signaling for providing an access service for a terminal device.

In a possible design solution, the configuration information includes time-frequency resource position information, and the time-frequency resource position information indicates the time-frequency resource positions of the M sets of downlink broadcast signaling.

In a possible design solution, the configuration information includes time-frequency resource position information and time-frequency resource position offset information, where the time-frequency resource position information indicates a time-frequency resource position of a $t^{th}$ set of downlink broadcast signaling in the M sets of downlink broadcast signaling; and the time-frequency resource position offset information indicates a time-frequency offset of a time-frequency resource position of a $u^{th}$ set of downlink broadcast signaling in the M sets of downlink broadcast signaling in comparison with the time-frequency resource position of the $t^{th}$ set of downlink broadcast signaling, t and u are any integers from 1 to M, and t and u are different.

In a possible design solution, the configuration information includes time-frequency resource position information and time-frequency resource position offset information, where the time-frequency resource position information indicates a time-frequency resource position of a $p^{th}$ piece of signaling in an $x^{th}$ set of downlink broadcast signaling in the M sets of downlink broadcast signaling; and the time-frequency resource position offset information indicates a time-frequency offset of a time-frequency resource position of a $q^{th}$ piece of downlink broadcast signaling in the $x^{th}$ set of downlink broadcast signaling in comparison with the time-frequency resource position of the $p^{th}$ piece of downlink broadcast signaling, x is any integer from 1 to M, and p and q are integers with different values.

Optionally, the time-frequency resource position information includes at least one of the following: a bitmap or an index of at least one piece of signaling in the M sets of downlink broadcast signaling.

Optionally, the time-frequency resource position offset information includes at least one of the following: a bitmap or an index of at least one piece of signaling in the M sets of downlink broadcast signaling.

In a possible design solution, any one of the M sets of downlink broadcast signaling includes at least one of the following: a synchronization information block SSB, a system information block SIB, a master information block MIB, a bearer control resource set CORESET 0, a message Msg1, a message Msg2, a message Msg3, a message Msg4, or paging Paging.

In a possible design solution, the N pieces of beam information are associated with at least one of the following: a position of a first network device, a position of the second network device, panel information of the first network device, or panel information of the second network device.

In a possible design solution, the configuration information may be carried in at least one of the following: downlink control information DCI, radio control RRC information, a medium access control-control element MAC-CE, or a physical downlink shared channel PDSCH.

Optionally, the transceiver module may include a sending module and a receiving module. The sending module is configured to implement a sending function of the communication apparatus according to the sixth aspect, and the receiving module is configured to implement a receiving function of the communication apparatus according to the sixth aspect.

Optionally, the transceiver module may be a transceiver, and the processing module may be a processor.

Optionally, the communication apparatus according to the sixth aspect may further include a storage module. The storage module stores a program or instructions. When the processing module executes the program or the instructions, the communication apparatus is enabled to perform the communication method according to the second aspect.

It may be understood that the communication apparatus according to the sixth aspect may be a network apparatus, for example, a network device, may be a chip (system) or another part or component that may be disposed in the network apparatus, or may be an apparatus including the network apparatus. This is not limited in this application. It may be understood that, if the communication apparatus is a chip (system) disposed in a device, the transceiver module may be an input/output interface of the chip (system), for example, an input/output circuit or a pin.

In addition, for technical effects of the communication apparatus according to the sixth aspect, refer to the technical effects of the communication method according to the second aspect. Details are not described herein again.

According to a seventh aspect, a communication apparatus is provided. The apparatus includes a transceiver module. The transceiver module is configured to receive power scaling information sent by a first network device, where the power scaling information indicates, to the communication apparatus according to the sixth aspect, an attenuation degree of transmit power of a data channel that has same time domain resource positions as M sets of downlink broadcast signaling, and the data channel is a channel for data transmission after the communication apparatus accesses the first network device.

Optionally, the transceiver module may include a sending module and a receiving module. The sending module is configured to implement a sending function of the communication apparatus according to the seventh aspect, and the receiving module is configured to implement a receiving function of the communication apparatus according to the seventh aspect.

Optionally, the transceiver module may be a transceiver, and the processing module may be a processor.

Optionally, the communication apparatus according to the seventh aspect may further include a storage module. The storage module stores a program or instructions. When the processing module executes the program or the instructions, the communication apparatus is enabled to perform the communication method according to the third aspect.

It may be understood that the communication apparatus according to the seventh aspect may be a terminal, may be a chip (system) or another part or component that may be disposed in the terminal, or may be an apparatus including the terminal. This is not limited in this application. It may be understood that, if the communication apparatus is a chip (system) disposed in a device, the transceiver module may be an input/output interface of the chip (system), for example, an input/output circuit or a pin.

In addition, for technical effects of the communication apparatus according to the seventh aspect, refer to the technical effects of the communication method according to the third aspect. Details are not described herein again.

According to an eighth aspect, a communication apparatus is provided. The communication apparatus includes a processor. The processor is configured to perform the communication method according to the first aspect to the fourth aspect.

In a possible design solution, the communication apparatus according to the eighth aspect may further include a transceiver. The transceiver may be a transceiver circuit or an interface circuit. The transceiver may be used by the communication apparatus according to the ninth aspect to communicate with another communication apparatus.

In a possible design solution, the communication apparatus according to the ninth aspect may further include a memory. The memory and the processor may be integrated together, or may be disposed separately. The memory may be configured to store a computer program and/or data related to the communication method according to the first aspect to the fourth aspect.

In this application, the communication apparatus according to the eighth aspect may be the network device according to any one of the first aspect to the fourth aspect, a chip (system) or another part or component that may be disposed in the network device, or an apparatus including the network device.

In addition, for technical effects of the communication apparatus according to the eighth aspect, refer to the technical effects of the communication method according to any one of the implementations of the first aspect to the fourth aspect. Details are not described herein again.

According to a ninth aspect, a communication apparatus is provided. The communication apparatus includes a processor. The processor is coupled to a memory, and the processor is configured to execute a computer program stored in the memory, to enable the communication apparatus to perform the communication method according to the first aspect or the fourth aspect.

In a possible design solution, the communication apparatus according to the ninth aspect may further include a transceiver. The transceiver may be a transceiver circuit or an interface circuit. The transceiver may be used by the communication apparatus according to the ninth aspect to communicate with another communication apparatus.

In this application, the communication apparatus according to the ninth aspect may be the network device according to any one of the first aspect to the fourth aspect, a chip (system) or another part or component that may be disposed in the network device, or an apparatus including the network device.

In addition, for technical effects of the communication apparatus according to the ninth aspect, refer to the technical effects of the communication method according to any one of the implementations of the first aspect to the fourth aspect. Details are not described herein again.

According to a tenth aspect, a communication apparatus is provided, and includes a processor and a memory.

The memory is configured to store a computer program, and when the processor executes the computer program, the communication apparatus is enabled to perform the communication method according to any one of the implementations of the first aspect to the fourth aspect.

In a possible design solution, the communication apparatus according to the tenth aspect may further include a transceiver. The transceiver may be a transceiver circuit or an interface circuit. The transceiver may be used by the communication apparatus according to the tenth aspect to communicate with another communication apparatus.

In this application, the communication apparatus according to the tenth aspect may be the network device according to any one of the first aspect to the fourth aspect, a chip (system) or another part or component that may be disposed in the network device, or an apparatus including the network device.

In addition, for technical effects of the communication apparatus according to the tenth aspect, refer to the technical effects of the method according to any one of the implementations of the first aspect to the fourth aspect. Details are not described herein again.

According to an eleventh aspect, a communication system is provided. The communication system includes a first network device and a second network device. The first network device and the second network device are configured to perform the method according to any one of the implementations of the first aspect to the fourth aspect.

According to a twelfth aspect, a computer-readable storage medium is provided, and includes a computer program or instructions. When the computer program or the instructions are run on a computer, the computer is enabled to perform the method according to any one of the possible implementations of the first aspect to the fourth aspect.

According to a thirteenth aspect, a computer program product is provided, and includes a computer program or instructions. When the computer program or the instructions are run on a computer, the computer is enabled to perform the method according to any one of the possible implementations of the first aspect to the fourth aspect.

## BRIEF DESCRIPTION OF DRAWINGS

FIG. 1 is a diagram of beam sweeping;
FIG. 2 is a diagram of directly transmitting an SSB beam by a network device;
FIG. 3 is a diagram of reflecting an SSB beam by a network device by using an IRS;
FIG. 4 is a diagram of an architecture of a communication system according to an embodiment of this application;
FIG. 5 is a schematic flowchart of a communication method according to an embodiment of this application;
FIG. 6 is a diagram of pointing to a second network device by a multi-peak beam according to an embodiment of this application;
FIG. 7a is a diagram 1 of pointing to a second network device by a narrow beam according to an embodiment of this application;
FIG. 7b is a diagram 2 of pointing to a second network device by a narrow beam according to an embodiment of this application;
FIG. 8 is a diagram of accessing a base station by a terminal according to an embodiment of this application;
FIG. 9 is a diagram 1 of a structure of a communication apparatus according to an embodiment of this application; and
FIG. 10 is a diagram 2 of a structure of a communication apparatus according to an embodiment of this application.

## DESCRIPTION OF EMBODIMENTS

For ease of understanding, the following first describes technical terms in embodiments of this application.

1. Beam:

The beam is a special directional sending or receiving effect formed by a transmitter or a receiver of a network device or a terminal device by using an antenna array, and is similar to a light beam formed by converging light to a direction by using a flashlight. Signal sending and receiving in a form of the beam can effectively increase a signal transmission distance.

The beam may be a wide beam, a narrow beam, or another type of beam. A technology for forming the beam may be a beamforming technology or another technology. The beamforming technology may be specifically a digital beamforming technology, an analog beamforming technology, a hybrid digital/analog beamforming technology, or the like.

The beam generally corresponds to a resource. For example, during beam measurement, the network device measures different beams by using different resources, and the terminal feeds back measured resource quality, so that the network device can know quality of a corresponding beam. During data transmission, the beam may also be indicated by using the resource corresponding to the beam. For example, the network device indicates a transmission configuration indicator-state (state) by using a transmission configuration number (transmission configuration index, TCI) field in downlink control information (downlink control information, DCI), and the terminal determines, based on a reference resource included in the TCI-state, a beam corresponding to the reference resource.

In a communication protocol, the beam may be specifically represented as a digital beam, an analog beam, a spatial domain filter (spatial domain filter), a spatial filter (spatial filter), a spatial parameter (spatial parameter), a TCI, a TCI-state, or the like. A beam used to send a signal may be referred to as a transmission beam (transmission beam, or Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), or the like. A beam used to receive a signal may be referred to as a reception beam (reception beam, or Rx beam), a spatial domain reception filter (spatial domain reception filter), a spatial reception filter (spatial reception filter), a spatial domain reception parameter (spatial domain reception parameter), a spatial reception parameter (spatial reception parameter), or the like.

It may be understood that embodiments of this application are uniformly described by using the beam, but the beam may be replaced with and understood as another equivalent concept, and is not limited to the foregoing mentioned concepts.

2. Resource:

In a communication protocol, a reference signal is configured in a form of the resource. A network device configures each reference signal for a terminal in the form of the resource. One resource is a configuration information unit, and usually includes a parameter related to a reference signal, for example, a time-frequency resource, a port quantity, and a time domain type (periodic/semi-static/aperiodic) of the reference signal.

The resource may be an uplink signal resource, or may be a downlink signal resource. An uplink signal includes but is not limited to a sounding reference signal (sounding reference signal, SRS) and a demodulation reference signal (demodulation reference signal, DMRS). A downlink signal includes but is not limited to a channel state information-reference signal (channel state information-reference signal, CSI-RS), a cell specific-reference signal (cell specific-reference signal, CS-RS), a user equipment (user equipment, UE) specific-reference signal (user equipment specific-reference signal, US-RS), a demodulation reference signal (demodulation reference signal, DMRS), and a synchronization signal/physical broadcast channel block (synchronization system/physical broadcast channel block, SS/PBCH block). The SS/PBCH block may be referred to as a synchronization signal block (synchronization signal block, SSB) for short.

The resource may be configured by using a radio resource control (radio resource control, RRC) message. In terms of a configuration structure, one resource is one data structure, and includes a related parameter of an uplink/-downlink signal corresponding to the resource, for example, a type of the uplink/downlink signal, a resource granularity carrying the uplink/downlink signal, sending time and a sending periodicity of the uplink/downlink signal, and a quantity of ports used to send the uplink/downlink signal. Each resource of the uplink/downlink signal has a unique identifier, to identify the resource of the downlink signal. It may be understood that the identifier of the resource may also be referred to as an identifier of the resource. This is not limited in embodiments of this application.

3. Antenna panel:

The antenna panel may be an antenna panel of a network device, or may be an antenna panel of a terminal. There are usually one or more antennas on one antenna panel. These antennas are arranged into an antenna array, and beamforming is performed, to form an analog beam. The antenna array may generate analog beams pointing to different directions. In other words, a plurality of analog beams may be formed on each antenna panel, and a best analog beam used by the antenna panel may be determined through beam measurement. In a communication protocol, the antenna panel may be represented by a panel (panel), a panel identifier (panel index), or the like, or may be implicitly represented in another manner. For example, the antenna panel may alternatively be represented by using an antenna port (for example, a CSI-RS port, an SRS port, a DMRS port, a phase-tracking reference signal (phase-tracking reference signal, PTRS) port, a cell-specific reference signal (cell-specific reference signal, CRS) port, a tracking reference signal (tracking reference signal, TRS) port, or an SSB port) or an antenna port group, may be represented by using a resource (for example, a CSI-RS resource, an SRS resource, a DMRS resource, a PTRS resource, a CRS resource, a TRS resource, or an SSB resource) or a resource group, may be represented by using a channel (for example, a physical uplink control channel (physical uplink control channel, PUCCH), a physical uplink shared channel (physical uplink shared channel, PUSCH), a physical random access channel (physical random access channel, PRACH), a PDSCH, a physical downlink control channel (physical downlink control channel, PDCCH), or a physical broadcast channel (physical broadcast channel, PBCH)), may be represented by using a beam, for example, a quasi-co-location (quasi-co-location, QCL), a TCI-state, a spatial relationship, or an identifier configured in the QCL, the TCI-state, or the spatial relationship, may be represented by using a beam group, for example, a QCL group, a TCI-state group, or a spatial relationship group, or may be represented by using a terminal capability parameter set reported by the terminal (there is a correspondence between the terminal capability parameter set and the antenna panel). One terminal capability parameter set includes a related terminal capability corresponding to one antenna panel. For example, a maximum quantity of transport layers, a maximum quantity of SRS ports, maximum transmit power, and the like that correspond to one antenna panel are included. In other words, the antenna panel mentioned in embodiments of this application may alternatively be replaced with the foregoing content.

The terminal may be equipped with a plurality of antenna panels. These antenna panels may be distributed at different positions and face different directions. This can ensure that at least one antenna panel faces the network device regardless of a direction that the terminal faces, and the terminal can perform data transmission with the network device.

Currently, when being powered on, the UE needs to receive a beam from the network device, for example, a static shared beam (static shared beam, SSB) of the network device, to perform a synchronization and access procedure. If the UE does not receive the SSB beam, the UE cannot access the network device, in other words, the UE has no network signal.

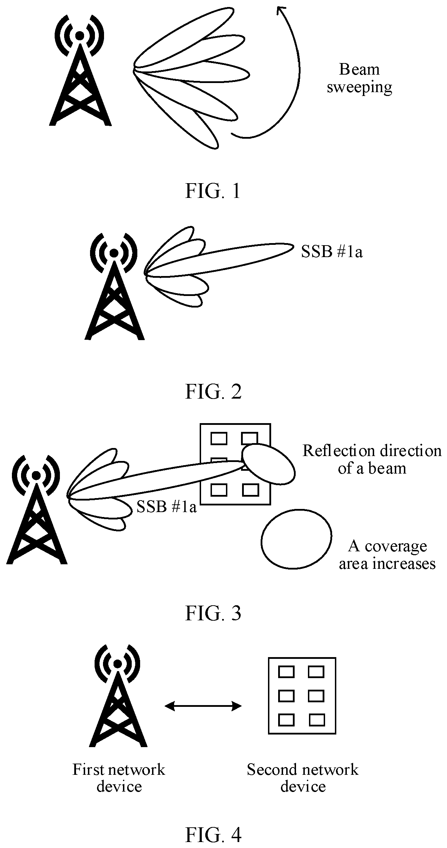

As shown in FIG. 1, a network device may sweep an SSB beam in a periodicity. In other words, the network device may send a beam in one direction at a moment, and send beams in different directions at a plurality of different moments, to cover a direction needed by an entire cell, and terminals located in different areas in the cell may receive several beams in the beams sent by the network device in the different directions, to implement access. The beams in the different directions may meet access requirements of the terminals in the different areas in the cell.

For example, it is assumed that an existing beam sweeping periodicity is G, that is, there are G time-frequency resources in one sweeping periodicity. This means that the first network device needs to send a corresponding beam on each of the G time-frequency resources. In this case, the first network device may sequentially send G beams on the G time-frequency resources. The G beams that are periodically swept are denoted as G beams #1. A beam #1 mentioned below may be understood as a beam in the G beams.

However, to ensure a coverage area of the network device, the network device uses a wide beam when performing beam sweeping. Because the wide beam has a large coverage width but a short coverage distance, some terminal devices are located in a beam coverage hole, and cannot access the network device.

An intelligent reflecting surface (intelligent reflecting surface, IRS) is a plane formed by a large quantity of low-cost passive reflecting elements, and can reflect a signal sent by the network device. Therefore, the IRS may be deployed on a live network, and the IRS is used to reflect the SSB beam, to expand an SSB beam coverage area of the network device, and implement access enhancement in the beam coverage hole. As shown in FIG. 2 and FIG. 3, it is assumed that when a network device periodically sweeps an $a^{th}$ beam SSB #1a in G beams #1, in comparison with a case in which the network device directly transmits the SSB #1a beam, after an IRS is added between the network device and UE, a signal coverage area of the SSB #1a clearly increases.

The IRS may reflect a received SSB beam. However, the SSB beam of the network device does not always point to the IRS, or a coverage distance of the SSB beam is short, and the IRS can receive little signal energy. Consequently, a reflection effect of the IRS on the SSB beam is not good. In addition, due to factors such as an IRS installation position and an SSB beam width, the SSB beam cannot accurately point to the IRS. Consequently, a signal coverage area of the network device is limited. In addition, switching cannot be performed on a reflection weight of the IRS in real time, and the switching of the reflection weight of the IRS cannot be synchronized with beam sweeping of the network device. Consequently, a signal coverage capability of the network device is weak.

For the foregoing technical problem, embodiments of this application provide the following technical solutions, to enhance the coverage capability of the network device.

The following describes technical solutions of this application with reference to accompanying drawings.

The technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system, for example, a long term evolution (long term evolution, LTE) system, a worldwide interoperability for microwave access (worldwide interoperability for microwave access, WiMAX) communication system, 5G, for example, a new radio (new radio, NR) system, and a future communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are for indicating giving an example, an illustration, or a description. Any embodiment or design solution described as an "example" in this application should not be explained as being more preferred or having more advantages than another embodiment or design solution. Exactly, use of the term "example" is intended to present a concept in a specific manner.

In embodiments of this application, "information (information)", "signal (signal)", "message (message)", "channel (channel)", and "signaling (signaling)" may be interchangeably used sometimes. It should be noted that meanings expressed by the terms are matchable when differences of the terms are not emphasized. The terms "of (of)", "corresponding (corresponding, relevant)", and "corresponding (corresponding)" may be sometimes interchangeably used. It should be noted that meanings expressed by the terms are matchable when differences of the terms are not emphasized. In addition, "/" mentioned in this application may indicate an "or" relationship.

It may be understood that in this application, an "indication" may include a direct indication, an indirect indication, an explicit indication, or an implicit indication. When a piece of indication information is described as indicating A, it may be understood that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated, or a manner in which the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information pre-agreed on (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device. The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For ease of understanding of embodiments of this application, a communication system shown in FIG. 4 is first used as an example to describe in detail a communication system applicable to embodiments of this application. For example, FIG. 4 is a diagram of an architecture of the communication system applicable to a communication method according to an embodiment of this application.

As shown in FIG. 4, the communication system mainly includes a first network device and a second network device.

The first network device may be a device that provides access for a terminal. For example, the first network device may be an access network (access network, AN) device, or may be referred to as a radio access network (radio access network, RAN) device. The RAN device may provide an access function for the terminal, and is responsible for functions such as radio resource management, quality of service (quality of service, QoS) management, and data compression and encryption on an air interface side. The RAN device may include a gNB in 5G, for example, an NR system, or one antenna panel or a group of antenna panels (including a plurality of antenna panels) of a base station in 5G, or may be a network node that forms a gNB, a transmission point (transmission reception point, TRP, or transmission point, TP), or a transmission measurement function (transmission measurement function, TMF), for example, a baseband unit (building baseband unit, BBU), a central unit (central unit, CU) or a distributed unit (distributed unit, DU), an RSU having a base station function, a wired access gateway, or a 5G core network element. Alternatively, the RAN device may include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, or the like. Alternatively, the RAN device may include a next-generation mobile communication system, for example, a 6G access network device, for example, a 6G base station. Alternatively, in a next-generation mobile communication system, the network apparatus may be named in another manner, which falls within the protection scope of embodiments of this application. This is not limited in this application.

The second network device may be the foregoing IRS. It may be understood that the second network device may alternatively be another network device, for example, a base station having an IRS, a base station or a network element having an IRS function, a base station or another network element that implements a signal reflection function, or another network element that receives indication information of a network device, completes phase adjustment and processing, and performs sending. The second network device may alternatively be replaced with any possible name. This is not limited.

In the communication system, the first network device configures a correspondence between time-frequency resources of M sets of broadcast signaling and N pieces of beam information, to indicate the second network device to adjust a coverage area of the first network device on a time-frequency resource of each set of broadcast signaling by using one piece of beam information corresponding to the time-frequency resource. This can enhance a coverage capability of the first network device, so that a terminal in a signal coverage hole can access the first network device.

It may be understood that FIG. 4 is merely a simplified diagram of an example for ease of understanding. The communication system may further include another network apparatus not drawn in FIG. 4.

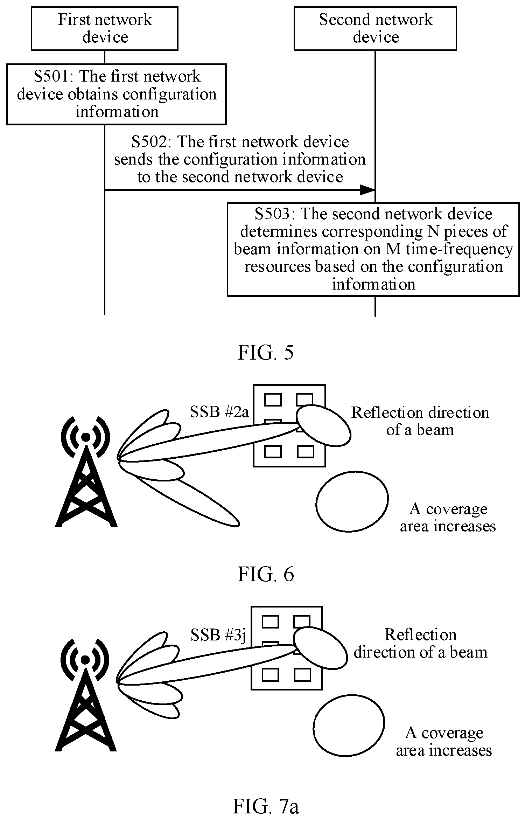

For ease of understanding, the following specifically describes a communication method provided in embodiments of this application with reference to FIG. 5.

For example, FIG. 5 is a schematic flowchart of a communication method according to an embodiment of this application. The method is applicable to communication between the first network device and the second network device in the foregoing communication system.

Specifically, as shown in FIG. 5, a procedure of the communication method is as follows.

S501: A first network device obtains configuration information.

The configuration information may indicate a correspondence between time-frequency resources of M sets of broadcast signaling and N pieces of beam information, and M and N are integers greater than 1.

The M sets of broadcast signaling are signaling for providing an access service for a terminal. Each set of broadcast signaling may include at least one piece of signaling, for example, a synchronization signal/physical broadcast channel block (synchronization signal/physical broadcast channel Block, SSB), a master information block (master information block, MIB), a system information block (system information block, SIB), a bearer control resource set 0 (control resource set, CORESET) 0, a message 1 (message, Msg1), a message 2 (message, Msg2), a message 3 (message, Msg3), a message 4 (message, Msg4), and/or paging (Paging).

The synchronization signal block SSB includes a primary synchronization signal (primary synchronization signal, PSS), a secondary synchronization signal (secondary synchronization signal, SSS), and a physical broadcast channel (physical broadcast channel, PBCH). The PSS is used to complete downlink synchronization, including frequency, symbol, and frame synchronization. The SSS is used to obtain an identifier of a current cell. The PBCH is used to receive and decode system information on a broadcast channel BCH, to establish a normal connection with the cell.

The MIB includes a common subcarrier spacing (subCarrierSpacingCommon), an SSB subcarrier offset (subcarrierOffset), a time domain position of a physical downlink shared channel PDSCH carrying a system information block SIB (dmrs-TypeA-Position), configuration information of a physical downlink control channel PDCCH related to a SIB (PDCCH-ConfigSIB), or a spare (spare) bit.

The SIB may include a SIB 1. The SIB 1 includes a parameter used to determine whether a cell is suitable for cell selection, and time domain scheduling information of another SIB.

The CORESET 0 is a group of physical resources and a group of DCI used to carry or bear a SIB.

The Msg1 is used to send a preamble. For example, an eNB sends a random access parameter (RACH-ConfigCommon) to UE in a cell through a PBCH, to notify all UE of information such as grouping of random access preambles (preambles), a threshold of a size of a message 3 (message, Msg3), and a power configuration. The eNB may select a part or all of 64 preambles for contention-based access. The Msg1 is carried on a PRACH.

The Msg2 includes an uplink transmission timing advance, an uplink resource allocated to a Msg3, a cell radio network temporary identifier (cell radio network temporary identifier, C-RNTI), and the like.

The Msg3 is used for scheduling transmission for the first time. After receiving a Msg2, UE transmits a Msg3 on an uplink resource allocated via the Msg2.

The Msg4 is used for contention resolution in two cases: an initial access and connection reestablishment scenario, and a handover and uplink/downlink data arrival scenario.

The paging is a process initiated by a network device for searching for a terminal device.

The time-frequency resources of the M sets of broadcast signaling correspond to M beams of the second network device. In other words, on the time-frequency resources of the M sets of broadcast signaling, the M beams point to the second network device. The M beams may be a same beam, or may be different beams. The M beams may be narrow beams, or may be wide beams. This is not limited.

For generation of the M beams, it can be learned from related content in the descriptions of the foregoing technical terms that due to factors such as an installation position of the second network device, that is, an IRS, and a beam width, the beam cannot accurately point to the second network device. Consequently, a signal coverage enhancement capability of the first network device is limited. Therefore, in this embodiment of this application, a signal coverage capability of the first network device may be enhanced according to two methods: additionally generating, when an existing beam remains unchanged, a narrow beam pointing to the second network device; and increasing a quantity of pointing beams on the basis of an existing beam to generate a narrow beam dedicated to pointing to the second network device.

The following specifically describes the two methods.

Method 1: On the basis of a beam #1, M beams #2 directionally pointing to the second network device are generated.

The M beams #2 have a same gain as or similar gains to the beam #1 in a beam pointing direction, and there is a peak additionally pointing to the second network device. In other words, the M beams #2 are multi-peak beams. A beam #2 mentioned below may be understood as a beam in the multi-peak beams, that is, the M beams #2 in Method 1.

For example, as shown in FIG. 6, a sweeping periodicity of an existing beam, for example, an SSB beam, is 7. In other words, a base station needs to sequentially send seven beams on seven time-frequency resources. The seven beams may be denoted as an SSB #1a, an SSB #1b, an SSB #1c, an SSB #1d, an SSB #1e, an SSB #1f, and an SSB #1g. A time-frequency resource corresponding to the SSB #1a is a1, a time-frequency resource corresponding to the SSB #1b is b1, a time-frequency resource corresponding to the SSB #1c is c1, a time-frequency resource corresponding to the SSB #1d is d1, a time-frequency resource corresponding to the SSB #1e is e1, a time-frequency resource corresponding to the SSB #1f is f1, and a time-frequency resource corresponding to the SSB #1g is g1. If none of the beams on the seven time-frequency resources accurately points to an IRS, the base station may generate a beam SSB #2. The SSB #2 is an SSB #2a on an $a^{th}$ time-frequency resource. It may be understood that the SSB #2 has a narrow beam directionally pointing to the IRS on each of the seven time-frequency resources, to increase energy of an SSB beam received by the second network device.

A process in which the first network device generates weights of the M beams #2 may be determined according to the following steps.

(1) Assume that a beam weight of an $i^{th}$ beam #1i in G beams #1 of the first network device is $\mathbf{w}_{SSB\#1i}$, and a beam weight of an $i^{th}$ beam #2i in the M beams #2 that is additionally generated is $\mathbf{w}_{SSB\#2i}$.

(2) Determine whether $\left|\mathbf{w}_{IRS,n}^{H}\mathbf{w}_{SSB\#1i}\right| \leq \gamma$ is true, where $\gamma$ is a preset threshold, $\mathbf{w}_{IRS,n}$ is an $n^{th}$ beam pointing to the second network device, and P is a quantity of beams pointing to the second network device, where

$$\mathbf{w}_{IRS,n}^{H} = \left[\mathbf{u}_{i_n^*}\otimes\mathbf{v}_{j_n^*}; \mathbf{u}_{i_n^*}\otimes\mathbf{v}_{j_n^*}\right] \in \mathbf{C}^{N_T\times 1}, n = 1, \dots, P \quad (1)$$

$$\mathbf{u}_{i_n^*} = \frac{1}{\sqrt{N_H}}\left[1, e^{j\left(\frac{2\pi i_n^*}{O_H N_H}\right)}, \dots, e^{j\left(\frac{2\pi i_n^*(N_H-1)}{O_H N_H}\right)}\right] \quad (2)$$

$$\mathbf{v}_{j_n^*} = \frac{1}{\sqrt{N_V}}\left[1, e^{j\left(\frac{2\pi j_n^*}{O_V N_V}\right)}, \dots, e^{j\left(\frac{2\pi j_n^*(N_V-1)}{O_V N_V}\right)}\right] \quad (3)$$

In the formulas (1) to (3), $N_H$ and $N_V$ respectively indicate a quantity of ports, in a horizontal direction, of an antenna panel of the first network device and a quantity of ports, in a vertical direction, of the antenna panel of the first network device. If the antenna panel of the first network is a dual-polarized antenna, $N_H N_V = N_T$, where $N_T$ is a quantity of receive ports of the first network device; and $O_H$ and $O_V$ respectively indicate oversampling multiples of a horizontal beam and a vertical beam of the antenna panel of the first network device. $i_n^*$ and $j_n^*$ may be obtained according to the following formulas (4) to (6):

$$\mathbf{p}_{i,j} = \left[\mathbf{u}_i\otimes\mathbf{v}_j; \mathbf{u}_i\otimes\mathbf{v}_j\right] \quad (4)$$

$$\mathbf{Y}_n = \sqrt{\rho}\mathbf{H}_n + \mathbf{E} + \mathbf{I} \in \mathbf{C}^{K\times N_T} \quad (5)$$

$$(i_n^*, j_n^*) = arg\max_{i,j}\left\|\mathbf{Y}_n\mathbf{p}_{i,j}\right\|_F \quad (6)$$

In the formulas (4) to (6), $\mathbf{H}_n$ indicates an uplink channel from an $n^{th}$ communication module of the second network device to the first network device, $\mathbf{I}$ indicates interference, $\mathbf{E}$ indicates noise, $\rho$ indicates an uplink power factor, and $K$ indicates a quantity of subcarriers for sending an SRS.

If $\left|\mathbf{w}_{IRS,n}^{H}\mathbf{w}_{SSB\#1i}\right| \leq \gamma$ is true, it indicates that directions of the two beams are the same, or it may be considered that beam weights of the two beams are the same. In this case, it indicates that the second network device is deployed in a direction to which the beam #1i points. In this case, the first network device does not need to generate a multi-peak beam according to $w_{IRS,n}$.

If $\left|\mathbf{w}_{IRS,n}^{H}\mathbf{w}_{SSB\#1i}\right| \leq \gamma$ is not true, $w_{IRS,n}$ and $w_{SSB\#1i}$ that do not satisfy $\left|\mathbf{w}_{IRS,n}^{H}\mathbf{w}_{SSB\#1i}\right| \leq \gamma$ are summed, as shown in the following formula (7):

$$\mathbf{w}_{SSB\#2i} = \mathbf{w}_{SSB\#1i} + \sum_{n,\left|\mathbf{w}_{IRS,n}^{H}\mathbf{w}_{SSB\#1i}\right| \leq \gamma} \mathbf{w}_{IRS,n} \quad (7)$$

(3) Perform normalization processing on $w_{SSB\#2i}$, as shown in the following formula (8):

$$\mathbf{w}_{SSB\#2i} = \frac{\mathbf{w}_{SSB\#2i}}{\left\|\mathbf{w}_{SSB\#2i}\right\|_{2}} \quad (8)$$

$w_{SSB\#2i}$ shown in the formula (8) is the beam weight of the beam #2i. In this case, the first network device may send, according to $w_{SSB\#2i}$, a beam directionally pointing to the second network device. Similarly, a beam weight of another multi-peak beam in the M beams #2 may be calculated according to the foregoing procedure. Details are not described herein.

In this embodiment of this application, each IRS corresponds to one directionally-pointing beam, or each IRS may have a plurality of directionally-pointing beams. This is not limited.

Method 2: On the basis of an existing SSB beam, M beams directionally pointing to the second network device are added.

The existing SSB beam may be the foregoing G beams that are periodically swept, that is, G beams #1. The M beams that are added by the first network device and that point to the second network device may be M beams that directionally point to the second network device and that are added on M time-frequency resources other than G time-frequency resources. The M beams may be denoted as M beams #3. A beam #3 mentioned below may be understood as a beam in the M beams in Method 2.

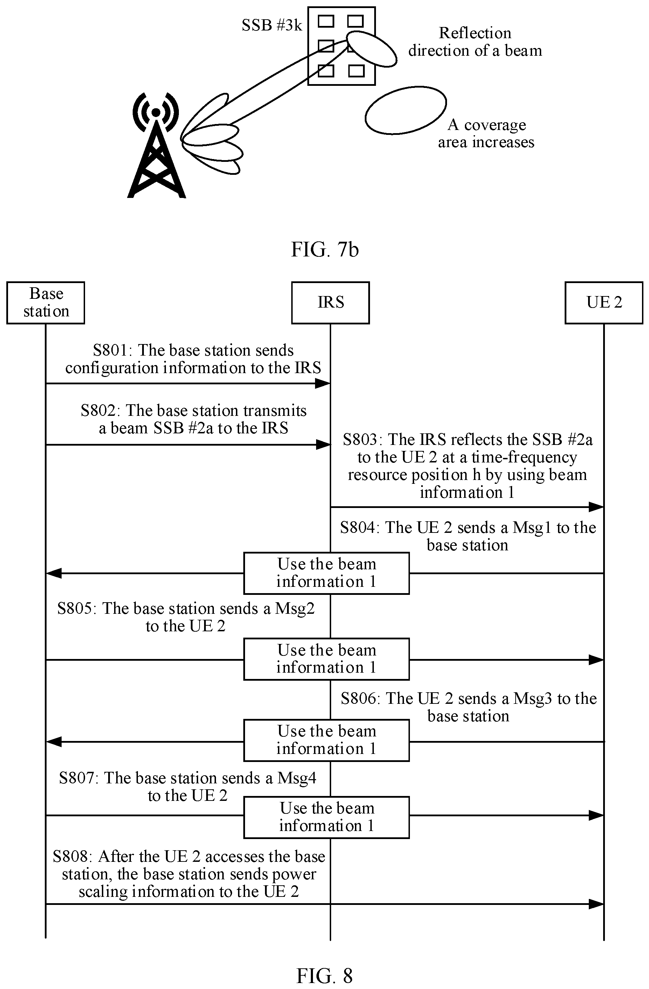

For example, as shown in FIG. 7a and FIG. 7b, a sweeping periodicity of an existing beam, for example, an SSB beam, is 7. In other words, a base station device needs to sequentially send seven beams on seven time-frequency resources. The seven beams may be denoted as an SSB #1a, an SSB #1b, an SSB #1c, an SSB #1d, an SSB #1e, an SSB #1f, and an SSB #1g. A time-frequency resource corresponding to the SSB #1a is a1, a time-frequency resource corresponding to the SSB #1b is b1, a time-frequency resource corresponding to the SSB #1c is c1, a time-frequency resource corresponding to the SSB #1d is d1, a time-frequency resource corresponding to the SSB #1e is e1, a time-frequency resource corresponding to the SSB #1f is f1, and a time-frequency resource corresponding to the SSB #1g is g1. The base station may add two beams pointing to an IRS, and the two beams are denoted as an SSB #3j and an SSB #3k. A time-frequency resource corresponding to the SSB #3j is j1, and a time-frequency resource corresponding to the SSB #3k is k1. In other words, on the time-frequency resource j1, there is the SSB #3j directionally pointing to the IRS; and on the time-frequency resource k1, there is the SSB #3k directionally pointing to the IRS.

A process in which the first network device generates weights of the M beams #3 may be determined according to the following steps.

It is assumed that a beam weight of an $O^{th}$ beam #3O in the M beams #3 is $w_{SSB\#3O}$, and $w_{SSB\#3O}$ may be determined according to the following formula (9):

$$\mathbf{w}_{SSB\#3O} = \arg\max_{\mathbf{p}_{i,j}} \left\|\mathbf{Y}_{n}\mathbf{p}_{i,j}\right\|_{F} \quad (9)$$

In the formula (9), for calculation methods for $p_{i,j}$ and $Y_{n}$, refer to the related descriptions in Method 1. Details are not described herein.

It may be understood that, in Method 1, for broadcast signaling, time-frequency resources of seven pieces of broadcast signaling respectively correspond to the time-frequency resources of the SSB #1a, the SSB #1b, the SSB #1c, the SSB #1d, the SSB #1e, the SSB #1f, and the SSB #1g; and in Method 2, time-frequency resources of two pieces of broadcast signaling respectively correspond to the time-frequency resources of the SSB #3j and the SSB #3k.

Optionally, when a time-frequency resource occupied by a beam that is periodically swept is indicated by using a relative time-frequency resource, the time-frequency resource is indicated in time domain by using a time unit, for example, a frame (frame), a subframe (subframe), a slot (slot), and a symbol (symbol). In this case, an index of a same beam of the first network device occupies a same time unit in each sweeping periodicity. For example, time-frequency resources occupied by the SSB #1a of the first network device in a periodicity 1 are a slot 1 and a slot 3, and time-frequency resources occupied by the SSB #1a in a periodicity 2 are also the slot 1 and the slot 3. In this case, a time-frequency resource corresponding to a same beam of the first network device remains unchanged in different sweeping periodicities.

When a time-frequency resource occupied by a beam that is periodically swept is indicated by using an absolute time-frequency resource, for example, a time-frequency resource corresponding to the SSB #1a of the first network device in a periodicity 1 is a moment A, and a time-frequency resource corresponding to the SSB #1a in a periodicity 2 is a moment B, a time-frequency resource corresponding to a same beam of the first network device changes in different sweeping periodicities.

The time-frequency resources of the M sets of broadcast signaling may be directly indicated, for example, directly indicated by the first network device by using time-frequency resource information; or may be indirectly indicated, for example, indirectly indicated by the first network device by using time-frequency resource information and time-frequency resource offset information. The following specifically describes the two manners.

Manner 1: The first network device directly indicates the time-frequency resources of the M sets of broadcast signaling by using the time-frequency resource information.

The time-frequency resource information may indicate time domain resources and frequency domain resources corresponding to the M sets of broadcast signaling. A structure of the time domain resource mainly includes a frame, a subframe, a slot, and a symbol. 1 frame=10 subframes=10*14 symbols, duration of one frame is 10 ms, and duration of one subframe is 1 ms.

It may be understood that, in a frame structure in a 5th generation (5th generation, 5G) mobile communication system, for example, a new radio (new radio, NR) system, a data sending periodicity is measured in frames, each frame has a frame number, frame numbers are cyclically used from 0 to 1023, and one cycle takes 10.23s. A sending periodicity of some control information is performed in subframes. In a long term evolution (long term evolution, LTE) system and 5G NR, the subframe is also an allocation unit of uplink/downlink data. However, there may be a symbol in a slot in one subframe in an uplink/downlink handover direction position in 5G NR, and uplink/downlink time resource allocation is more flexible.

The frequency domain resource includes a plurality of subcarriers, and a basic unit of the frequency domain resource is a resource element (resource element, RE) or a resource block (resource block, RB). One orthogonal frequency division multiplexing (orthogonal frequency division multiplexing, OFDM) symbol and one subcarrier form one RE. All OFDM symbols in one slot and 12 subcarriers in frequency domain form one RB.

Therefore, a time domain resource and a frequency domain resource of each set of broadcast signaling, for example, a synchronization information block SSB, a SIB, a MIB, a CORESET 0, a Msg1, a Msg2, a Msg3, a Msg4, or paging, may be directly indicated by using the time-frequency resource information.

Specifically, the time-frequency resource information may include at least one of the following: a bitmap or an index of at least one piece of signaling in the M sets of broadcast signaling.

If the time-frequency resources of the M sets of broadcast signaling are indicated by using the bitmap, for example, a time-frequency resource of a $1^{st}$ set of broadcast signaling in the M sets of broadcast signaling may be indicated by using a plurality of bits in the bitmap. For example, if a bitmap of the SIB is 0001, a time-frequency resource corresponding to the SIB may be defined as Aa; and if a bitmap of the MIB is 0010, a time-frequency resource corresponding to the MIB may be defined as Ab. Time-frequency resources indicated by Aa and Ab may be the same or may be different. This is not limited.

It may be understood that different time-frequency resources may be defined by using different values of a plurality of bits in the bitmap. Therefore, the second network device may obtain a time-frequency resource of any one of the M sets of broadcast signaling based on a corresponding bitmap. Different meanings may be assigned to the different values of the plurality of bits in the bitmap, to correspond to different time-frequency resources. Meanings defined for a plurality of bits in each bitmap may be adjusted based on an actual situation. This is not limited.

If the time-frequency resources of the M sets of broadcast signaling are indicated by using the index of the at least one piece of signaling in the M sets of broadcast signaling, for example, an index SSB index 1 of a synchronization information block of the $1^{st}$ set of broadcast signaling in the M sets of broadcast signaling, the SSB index 1 corresponds to a time-frequency resource corresponding to the beam pointing to the second network device. Therefore, the second network device may obtain a time-frequency resource of the synchronization information block based on the SSB index 1. A time-frequency resource of other signaling may also be obtained according to the foregoing steps. Details are not described again.

Manner 2: The first network device indirectly indicates the time-frequency resources of the M sets of broadcast signaling by using the time-frequency resource information and the time-frequency resource offset information. There are the following two cases.

Case 1: The time-frequency resource information indicates a time-frequency resource of a $t^{th}$ set of broadcast signaling in the M sets of broadcast signaling. A specific indication manner may be indicated by using the foregoing bitmap or the foregoing index of the at least one piece of signaling in the M sets of broadcast signaling. Details are not described herein. The time-frequency resource offset information indicates a time-frequency offset of a time-frequency resource of a

$u^{th}$ set of broadcast signaling in the M sets of broadcast signaling in comparison with the time-frequency resource of the $t^{th}$ set of broadcast signaling, t and u are any integers from 1 to M, and t and u are different.

The time-frequency resource offset information may specifically include a time domain offset, a frequency domain offset, or a time domain offset and a frequency domain offset. The time domain offset includes a symbol-level offset, a slot-level offset, a subframe-level offset, a framelevel offset, and a specific time offset. For example, an offset of a time domain resource of the $u^{th}$ set of broadcast signaling is a total of two slots in comparison with a time domain resource of the $t^{th}$ set of broadcast signaling. In this case, the second network device may obtain the time domain resource of the $u^{th}$ set of broadcast signaling based on the time domain resource of the $t^{th}$ set of broadcast signaling and the 2-slot offset.

The frequency domain offset includes an RE-level offset, an RB-level offset, and a specific frequency offset. For example, an offset of a frequency domain resource of the $u^{th}$ set of broadcast signaling is a total of two RBs in comparison with a frequency domain resource of the $t^{th}$ set of broadcast signaling. In this case, the frequency domain resource of the $u^{th}$ set of broadcast signaling may be obtained based on the frequency domain resource of the $t^{th}$ set of broadcast signaling and the 2-RB offset.

Case 2: The time-frequency resource information indicates a time-frequency resource of a $p^{th}$ piece of signaling in an $x^{th}$ set of broadcast signaling in the M sets of broadcast signaling. For example, the $p^{th}$ piece of signaling is a SIB, and a time-frequency resource of the SIB may be indicated by using the foregoing bitmap or an index of the SIB. Details are not described herein.

The time-frequency resource offset information indicates a time-frequency offset of a time-frequency resource of a $q^{th}$ piece of broadcast signaling in the $x^{th}$ set of broadcast signaling in comparison with the time-frequency resource of the $p^{th}$ piece of broadcast signaling, x is any integer from 1 to M, and p and q are integers with different values. For example, the $q^{th}$ piece of broadcast signaling is a MIB. If an offset of a time domain resource of the MIB is a total of four symbols in comparison with a time domain resource of the SIB, the second network device may obtain the time domain resource of the MIB based on the time domain resource of the SIB and the 4-symbol offset. If an offset of a frequency domain resource of the MIB is a total of three REs in comparison with a frequency domain resource of the SIB, the frequency domain resource of the MIB may be obtained based on the frequency domain resource of the SIB and the 3-RE offset. A specific calculation manner is not described herein.

Optionally, the first network device may indicate a time-frequency resource of a $k1^{th}$ piece of signaling in the $x^{th}$ set of broadcast signaling in the M sets of broadcast signaling, and obtain a time-frequency resource of another piece of signaling in the $x^{th}$ set of broadcast signaling based on the time-frequency resource of the $k1^{th}$ piece of signaling. For example, the first network device indicates a time-frequency resource of a synchronization information block SSB in the $x^{th}$ set of broadcast signaling, and the second network device may obtain time-frequency resources of a SIB, a Msg1, a Msg2, a Msg3, and a Msg4 in the $x^{th}$ set of broadcast signaling according to the following steps.

(1) The second network device parses subcarrier spacing parameter signaling to obtain subcarrier spacings of the SIB, the Msg2, and the Msg4.

Specifically, if the second network device detects the MIB in a low frequency band, a value corresponding to "scs15 or 60" is 15 kHz, and a value corresponding to "scs30 or 120" is 30 kHz. If the second network device does not detect the MIB in a low frequency band, a value corresponding to "scs15 or 60" is 60 kHz, and a value corresponding to "scs30 or 120" is 120 kHz.

(2) The second network device obtains a PDCCH configuration related to the SIB, and calculates a time-frequency resource of a CORESET 0 on the basis of the synchronization information block SSB.

Specifically, the second network device obtains 8-bit PDCCH-ConfigSIB1; queries tables 13-1 to 13-10 in 3GPP TS 38.213 based on an index formed by four most significant bits, to obtain a multiplexing mode of the CORESET 0, a quantity of RBs (that is, a frequency domain length), a quantity of symbols (that is, a time domain length), and an RB offset (that is, an offset relative to a frequency domain start position of the SSB); and then queries tables 13-11 to 13-15 in 3GPP TS 38.213 based on an index formed by four least significant bits, to obtain a system frame number (system frame number, SFN), a slot index, and a start symbol.

(3) The second network device parses RACH-configuration index (PRACH-ConfigurationIndex) signaling, to obtain time-frequency resources of the Msg1, the Msg2, the Msg3, and the Msg4.

Specifically, a time-frequency resource of the Msg1 is obtained by querying an index slot start symbol and a time domain Rach-Occasion number in tables 6.3.3.2-2 to 6.3.3.2-4 in TS 38.211.

Optionally, the second network device may determine a time-frequency resource of the Msg2 by receiving indication information delivered by the first network device, and the indication information includes the time-frequency resource of the Msg2.

Optionally, the second network device may respectively obtain, by parsing a 10-bit RbAssign field and 1-bit UlDelay in uplink scheduling grant (UL grant) signaling carried in the Msg2, a frequency domain resource and a time domain resource that correspond to the Msg3.

Optionally, the second network device determines, by receiving indication information delivered by the first network device, a time-frequency resource on which the first network device delivers the Msg4.

The N pieces of beam information are used to determine a reflection direction of each beam transmitted by the first network device to the second network device. The beam information may include a reflection weight, and the reflection weight is used to determine reflection directions of the M beams that are of the first network device and that are reflected by the second network device.

Any one of the N pieces of beam information may be determined based on an incident angle between the first network device and the second network device, panel information of the second network device, and an area in which the first network device provides a service, in other words, may be determined based on angles at which the M beams are reflected, incident angles at which the M beams are emitted into the second network device, and the area in which the first network device provides a service. The incident angle between the first network device and the second network device is associated with a position of the first network device, a position of the second network device, panel information of the first network device, or the panel information of the second network device. The panel information includes at least one of the following: a quantity of array elements of a panel, an array element spacing of the panel, a panel direction, or an array element arrangement of the panel.

The position of the first network device is a physical position at which the first network device is deployed. The position of the second network device is a physical position at which the second network device is deployed. The panel information of the first network device may include first panel direction parameter information, and the first panel direction parameter information indicates a direction of an antenna panel of the first network device. Specifically, the direction of the antenna panel of the first network device may be determined by using a normal direction of the antenna panel of the first network device. The panel information of the second network device may include second direction parameter information, and the second direction parameter information indicates a direction of an antenna panel of the second network device. Specifically, a direction of an IRS panel may be determined by using a normal direction of the IRS panel.

The position of the first network device, the position of the second network device, the panel information of the first network device, and the panel information of the second network device may be used to determine the incident angle between the first network device and the second network device, to be specific, an included angle between a direction of a beam transmitted by the first network device to the second network device and an antenna panel direction of the second network device, or an included angle between a direction of a beam that is reflected by the second network device and received by the first network device and an antenna panel direction of the second network device.

It may be understood that, when the physical position of the first network device, the physical position of the second network device, the antenna panel information of the first network device, and the antenna panel information of the second network device are determined, an incident angle that is of the beam pointing to the second network device and that is generated by the first network device is a fixed value.

The correspondence between the time-frequency resources of M pieces of broadcast signaling and the N pieces of beam information means that the second network device uses one of the N pieces of beam information on any one of the M time-frequency resources, to increase strength of a signal that can be received in a service area. The service area is an area in which the first network device needs to provide a service. In other words, a time-frequency resource of each set of broadcast signaling in the time-frequency resources of the M sets of broadcast signaling corresponds to one of the N pieces of beam information. The second network device may reflect a beam on the time-frequency resource of each set of broadcast signaling by using the corresponding beam information. The N pieces of beam information may reflect the M sets of broadcast signaling to a maximum of N different areas, so that all terminal devices in the N different areas can access the first network device by receiving broadcast signaling, to enhance a signal coverage capability of the first network device.

S502: The first network device sends the configuration information to the second network device. The second network device receives the configuration information from the first network device.

The first network device may send the configuration information to the second network device by using downlink control information DCI, radio resource control (radio resource control, RRC) information, a medium access control-control element (medium access control-control element, MAC-CE), or a physical downlink shared channel (physical downlink shared channel, PDSCH).

S503: The second network device determines the corresponding N pieces of beam information on the M time-frequency resources based on the configuration information.

It can be learned from the foregoing descriptions that the time-frequency resource of each set of broadcast signaling in the time-frequency resources of the M pieces of broadcast signaling corresponds to one of the N pieces of beam information. The second network device may reflect broadcast signaling on the time-frequency resource of each set of broadcast signaling by using the corresponding beam information. It may be understood that each set of broadcast signaling is carried in corresponding M beams, and the second network device reflects each set of broadcast signaling to a corresponding service area by switching between different beam information, so that all terminal devices in these areas can implement access.

For example, in Method 2, the SSB #3j and the SSB #3k are beams pointing to the second network device, in other words, there are two pieces of corresponding beam information on time-frequency resources corresponding to the SSB #3j and the SSB #3k. The two pieces of beam information may be the same or may be different. If a time-frequency resource j of broadcast signaling corresponding to the SSB #3j corresponds to beam information 1, a beam reflection angle corresponding to the beam information 1 is 90°. If a time-frequency resource k of broadcast signaling corresponding to the SSB #3k corresponds to beam information 2, a beam reflection angle corresponding to the beam information 2 is 75°. In this case, when the SSB #3j is swept in a beam periodicity, the second network device may reflect the SSB #3j based on the configuration information by using the beam information 1; and when the SSB #3k is swept in the beam periodicity, the second network device may reflect the SSB #3k based on the configuration information by using the beam information 2, so that terminal devices in different areas can access the first network device.

In conclusion, the first network device may configure the correspondence between the time-frequency resources of the M sets of broadcast signaling and the N pieces of beam information, to indicate the second network device to adjust a coverage area of the first network device on the time-frequency resource of each set of broadcast signaling by using one piece of beam information corresponding to the time-frequency resource. This can enhance the signal coverage capability of the first network device, so that a terminal device in a signal coverage hole can access the first network device.

With reference to the foregoing embodiment, optionally, the method further includes: The first network device obtains energy that is of a downlink signal and that is fed back by the terminal device, and when the energy of the downlink signal is less than a preset energy threshold, the first network device indicates the second network device to use second beam information in the N pieces of beam information.

The terminal device is a terminal device in the area in which the first network device provides a service, and is denoted as a first terminal device. The first terminal device requests to access the first network device. The downlink signal is a signal received by the first terminal device when the second network device uses first beam information in the N pieces of beam information, in other words, a signal that may be received by the first terminal device when the second network device uses the first beam information to reflect signaling sent by the first network device, for example, a synchronization signal block SSB and/or a channel state information-reference signal CSI-RS.

The synchronization signal block SSB is a signal used by the first terminal device for accessing the first network device. For a specific function, refer to the related descriptions in S501. Details are not described herein again. The CSI-RS may be used to obtain channel state information, for example, used to measure a channel between the first network device and the first terminal device, and obtain channel state information needed for scheduling and link adaptation, for example, a precoding matrix and channel quality information.

The first terminal device may calculate energy of the synchronization signal block SSB and/or the CSI-RS according to an existing signal energy calculation formula. It may be understood that the energy of the synchronization signal block SSB and/or the CSI-RS may alternatively be obtained in another manner. This is not limited.

The preset energy threshold may be minimum needed energy that meets a downlink signal for the first terminal device to perform measurement and access. In other words, the first terminal device may use measurement and access services on a channel to which the downlink signal points, only when the downlink signal is greater than or equal to the preset energy threshold. When the energy of the downlink signal is less than the preset energy threshold, the downlink signal is a signal that is unusable for the first terminal device. It may be understood that the foregoing is merely an example, and the preset energy threshold may be determined based on an actual situation. This is not limited.

When the energy of the downlink signal is less than the preset energy threshold, it indicates that energy of a beam signal reflected when the second network device switches to a first beam weight is weak, and cannot meet a case in which the first terminal device accesses the first network device and performs channel measurement. In this case, the first network device may indicate the second network device to use the second beam information in the N pieces of beam information, and the second beam information is different from the first beam information.

Optionally, on a time-frequency resource corresponding to the first beam information, the first network device may receive a downlink signal reflected by the second network device by using the second beam information, and determine whether downlink energy can meet a requirement of the first terminal device in an area for channel measurement and an access service, to dynamically adjust the beam information. It may be understood that the first network device may determine the energy of the downlink signal according to the foregoing steps, to adjust a weight of the second network device, so that first terminal devices in different areas can normally access the first network device.

Optionally, the method further includes: The first network device obtains, in a preset time interval, a quantity of uplink signals received from the terminal device, and when the quantity of uplink signals is less than a preset signal quantity threshold, the first network device indicates the second network device to use second beam information in the N pieces of beam information.

The terminal device may be the foregoing first terminal device. Details are not described herein. The uplink signal is a signal that is sent by the terminal device to access the first network device and that is received by the first network device when the second network device uses first beam information in the N pieces of beam information. The uplink signal is used by the terminal device to request to access the first network device. In other words, the uplink signal is a signal received by the first network device when the second network device reflects, by using the first beam information, signaling sent by the first terminal device, for example, a Msg1, a Msg3, an SRS, acknowledgement (acknowledgement, ACK) information, or negative acknowledgement (negative acknowledgement, NACK) information. It may be understood that the Msg1 may be carried on a PRACH, and the Msg3 may be carried on a PUSCH. The preset signal quantity threshold may be the quantity of uplink signals that can be received by the first network device from the first terminal device in the preset time interval. The preset time interval may be a period of time. The period of time may be a period of time in which the first terminal device sends the Msg1 and the Msg3 when requesting to access the first network device. It may be understood that the foregoing is merely an example, and the preset signal quantity threshold and the preset time interval may be determined based on an actual situation. This is not limited.

If the quantity of uplink signals is less than the preset signal quantity threshold, it indicates that energy of an uplink signal reflected when the second network device switches to the first beam information is weak, and cannot meet a requirement of the first terminal device to access the first network device. In this case, the first network device may indicate the second network device to use the second beam information in the N pieces of beam information, and the second beam information is different from the first beam information.

Optionally, on a time-frequency resource corresponding to the first beam information, the first network device may receive an uplink signal reflected by the second network device by using the second beam information, and determine whether a quantity of received uplink signals can meet a requirement of the first terminal device in an area to access the first network device, to dynamically adjust the beam information. It may be understood that the first network device may determine the quantity of uplink signals according to the foregoing steps, to adjust a weight of the second network device, so that first terminal devices in different areas can normally access the first network device.

Optionally, the method further includes: The first network device obtains energy of an uplink signal received from the terminal device, and when the energy of the uplink signal is less than a preset energy threshold, the first network device indicates the second network device to use second beam information in the N pieces of beam information.

The terminal device may be the foregoing first terminal device. For the uplink signal, refer to the related descriptions of the foregoing uplink signal. Details are not described herein.

The preset energy threshold may be minimum needed energy that meets an uplink signal for the first terminal device to perform access. In other words, the first terminal device may use the downlink signal to access the first network device only when the uplink signal is greater than or equal to the preset energy threshold. When the energy of the uplink signal is less than the preset energy threshold, the downlink signal is a signal that is unusable for the first terminal device. It may be understood that the foregoing is merely an example, and the preset energy threshold may be determined based on an actual situation. This is not limited.

If the energy of the uplink signal is less than the preset energy threshold, it indicates that energy of an uplink signal reflected when the second network device switches to the first beam information for reflection is weak, and cannot meet a requirement of the first terminal device to access the first network device. In this case, the first network device may indicate the second network device to use the second beam information in the N pieces of beam information, and the second beam information is different from the first beam information.

Optionally, on a time-frequency resource corresponding to the first beam information, the first network device may receive an uplink signal reflected by the second network device by using the second beam information, and determine whether uplink energy can meet an access requirement of the first terminal device, to dynamically adjust the beam information. It may be understood that the first network device may determine the energy of the uplink signal according to the foregoing steps, to adjust a weight of the second network device, so that first terminal devices in different areas can normally access the first network device.

Optionally, the method further includes: The first network device sends power scaling information to a second terminal device.

The power scaling information indicates, to the terminal device, an attenuation degree of transmit power of a data channel that has same time domain resources as the M sets of broadcast signaling, and the data channel is a channel for data transmission after the second terminal device accesses the first network device. The second terminal device is a terminal device that accesses the first network device.

It may be understood that the power scaling information is associated with downlink broadcast signaling. For example, the downlink broadcast signaling may be the synchronization information block SSB, the SIB, the MIB, the CORESET 0, the Msg2, the Msg4, or the paging described above.

In a case of the multi-peak beam corresponding to Method 1, because energy is constant, a beam gain at each pointing direction of each multi-peak beam decreases. In this case, power boosting (power boosting) needs to be performed on the beam, to increase the beam gain at each pointing direction of the multi-peak beam. In other words, signal power that is of a time-frequency resource and that corresponds to the multi-peak beam needs to be boosted, so that it can be ensured that a gain of the multi-peak beam is large enough, and energy of a signal reflected by the second network device is strong enough, to meet an access requirement of a terminal device. The terminal device herein is a terminal device that accesses the first network device, and is denoted as the second terminal device.

After the second terminal device accesses the first network device, the first network device needs to deliver power scaling information of a demodulation reference signal (demodulation reference signal, DMRS) to the second terminal device, so that the second network device can perform normal data receiving and demodulation.

The power scaling information may include at least one of the following: a power scaling factor, a quantity of IRSs, and a broadcast signaling power boosting value.

The power scaling factor may be obtained according to the following steps.

(1) On a same time domain resource, it is assumed that a quantity of RBs corresponding to signaling that needs power boosting is $x1$, a quantity of remaining RBs on the time domain resource is $y1$, and power occupied by each RB is $P_{RB}$. In this case, original total power is $P = P_{RB} (x1 + y1)$. It may be understood that the $x1$ RBs are a time-frequency resource corresponding to each piece of signaling in the M sets of broadcast signaling, and the $y1$ RBs are a time-frequency resource corresponding to a data channel for data transmission after the second terminal device accesses the first network device.

(2) It is assumed that m dB is boosted for each piece of broadcast signaling in each set of broadcast signaling, and a power scaling factor is $\alpha$. It may be understood that total power corresponding to each time domain resource remains unchanged, and the power scaling factor may be calculated according to the following formulas (10) and (11):

$$P_{RB}(x + y) = 10^{\frac{m}{10}} P_{RB} x + \alpha^2 P_{RB} y \quad (10)$$

$$\alpha = \sqrt{1 - \frac{\left(10^{\frac{m}{10}} - 1\right)x}{y}} \quad (11)$$

It can be learned from the formulas (10) and (11) that, if power on x RBs is boosted to *m dB,* power on y RBs backs off to $\left(10 \log \left(1 - \frac{\left(10^{\frac{m}{10}} - 1\right)x}{y}\right)\right) dB$. The first network device may quantize the power scaling factor by using bits, and deliver the quantized power scaling factor to the second terminal device. For a specific bit quantization method, refer to related descriptions in the conventional technology. Details are not described herein.

The first network device may further send the quantity of IRSs to the second terminal device, and the second terminal device may obtain a power back-off value of the data channel based on the quantity of IRSs, to further calculate the power scaling factor. It may be understood that the quantity of IRSs is associated with a quantity of multi-peak beams. If each IRS has a beam pointing to the IRS, a quantity of pointing directions of the multi-peak beam is equal to the quantity of IRSs plus 1.

For example, the first network device may deliver the power scaling information (that is, the quantity of IRSs to which the multi-peak beam points) to the second network device, and the second terminal device obtains the power back-off value of the data channel. In this case, the second terminal device may locally calculate $\alpha$ according to the formula (11).

For example, the base station may deliver, to the second terminal device, a quantity of IRSs being 1. In this case, the second terminal device may learn that a quantity of multi-peak beams that need power boosting is 2. It may be understood that power of the two beams needs to be boosted to 3 dB, and power of the data channel backs off to 0.35 dB. Alternatively, the first network device delivers, to the second terminal device, a quantity of IRSs being 2. In this case, the second terminal device may learn that the quantity of multi-peak beams that need power boosting is 3. It may be understood that power of the three beams needs to be boosted to 4.77 dB, and the power of the data channel backs off to 0.75 dB.

Similarly, the first network device may further deliver power boosting values corresponding to the M sets of broadcast signaling to the second terminal device, and the second terminal device may calculate the power back-off value of the data channel according to the power boosting values and the formula (11). Details are not described herein.

Optionally, after the second terminal device accesses the first network device, a signal received by the second terminal device on the data channel may be expressed as $\mathbf{Y} = \sqrt{\rho_1}\mathbf{H} + \mathbf{E}$. $\mathbf{H} \in \mathbf{C}^{K \times N_T}$ is an actual received data matrix; $\mathbf{E}$ is additive noise. $N_T$ and K respectively indicate a quantity of transmit antennas of the first network device and a quantity of subcarriers for sending a signal; and $\rho_1$ is a downlink power factor. If the additive noise is ignored, it may be learned that an estimated channel is $\mathbf{H_1} = \frac{\mathbf{Y}}{\sqrt{\rho_1}}$. It may be understood that $\mathbf{H_1}$ may alternatively be obtained according to another estimation method. This is not limited herein.

The second terminal device may obtain, based on $\mathbf{H_1}$ and the power scaling factor $\alpha$, an estimation result of a data channel $\tilde{\mathbf{H}}$ after power scaling: $\widetilde{\mathbf{H}} = \dfrac{\alpha \mathbf{Y}}{\sqrt{\rho_1}}$ . The second terminal device may use the scaled $\tilde{\mathbf{H}}$ to receive and demodulate subsequent data, to ensure normal data transmission between the first network device and the second terminal device.

The power scaling factor is determined by frequency domain bandwidth occupied by the M sets of broadcast signaling and frequency domain bandwidth occupied by the data channel that has the same time domain resources as the M sets of broadcast signaling. It can be learned from the formulas (10) and (11) that the power scaling factor is related to x1 and y1, where x1 is the frequency domain bandwidth occupied by the M sets of broadcast signaling, and y1 is the frequency domain bandwidth occupied by the data channel that has the same time domain resources as the M sets of broadcast signaling.

With reference to the method embodiments, the foregoing describes the overall procedure of the communication method provided in embodiments of this application. For ease of understanding, the following describes the foregoing method by using a specific scenario.

As shown in FIG. 8, the foregoing first network device is a base station, the second network device is an IRS, and the second terminal device is UE 2.

S801: The base station sends configuration information to the IRS.

The configuration information includes beam information, a synchronization information block SSB index, and an incident angle between the base station and the IRS.

S802: The base station transmits a beam SSB #2a to the IRS.

Specifically, the base station performs beam sweeping by using the beams in Method 1. It is assumed that a time-frequency resource corresponding to an SSB #2a is a1, a time-frequency resource corresponding to an SSB #2b is b1, a time-frequency resource corresponding to an SSB #2c is c1, a time-frequency resource corresponding to an SSB #2d is d1, a time-frequency resource corresponding to an SSB #2e is e1, a time-frequency resource corresponding to an SSB #2f is f1, and a time-frequency resource corresponding to an SSB #2g is g1.

S803: The IRS reflects the SSB #2a to the UE 2 on the time-frequency resource a1 by using beam information 1.

Specifically, when the base station periodically sweeps the SSB #2a, the IRS may switch, based on the synchronization information block SSB index on the time-frequency resource h1, to the corresponding beam information 1 to reflect the SSB #2a, and a reflection angle of a beam corresponding to the beam information 1 is 90.

S804: The UE 2 sends a Msg1 to the base station. The Msg1 is a signal reflected by the IRS to the base station by using the beam information 1.

S805: The base station sends a Msg2 to the UE 2. The Msg2 is a signal reflected by the IRS to the UE 2 by using the beam information.

S806: The UE 2 sends a Msg3 to the base station. The Msg3 is a signal reflected by the IRS to the base station by using the beam information.

S807: The base station sends a Msg4 to the UE 2. The Msg4 is a signal reflected by the IRS to the UE 2 by using the beam information 1.

S808: After the UE 2 accesses the base station, the base station sends power scaling information to the UE 2.

It may be understood that the Msg1, the Msg2, the Msg3, and the Msg4 are carried by using a beam corresponding to the beam information 1.

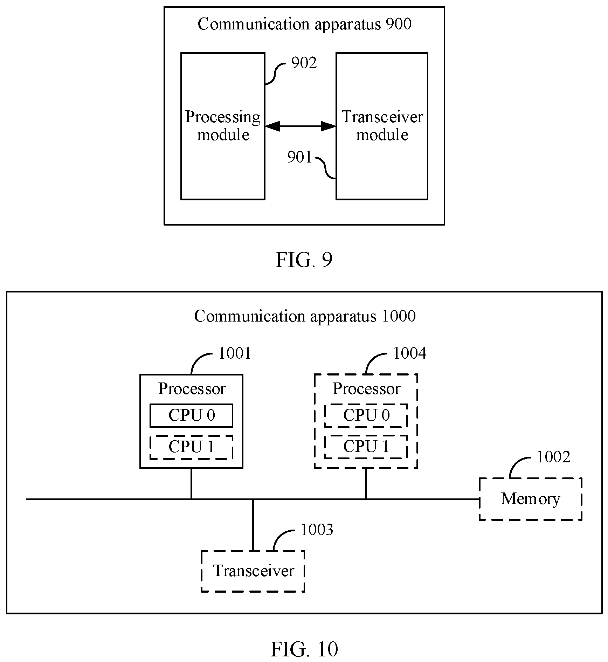

The foregoing describes in detail the communication method provided in embodiments of this application with reference to FIG. 5 to FIG. 8. The following describes in detail communication apparatuses configured to perform a communication method provided in embodiments of this application with reference to FIG. 9 and FIG. 10.

FIG. 9 is a diagram 1 of a structure of a communication apparatus according to an embodiment of this application. For example, as shown in FIG. 9, the communication apparatus 900 includes a transceiver module 901 and a processing module 902. For ease of description, FIG. 9 shows only main components of the communication apparatus.

In some embodiments, the communication apparatus 900 is applicable to the communication system shown in FIG. 4, and performs a function of the foregoing first network device.

For example, the processing module 902 is configured to obtain configuration information. The transceiver module 901 is configured to send the configuration information to a second network device. The configuration information indicates a correspondence between time-frequency resources of M sets of broadcast signaling and N pieces of beam information, and M and N are integers greater than 1; and a time-frequency resource of each set of broadcast signaling in the time-frequency resources of the M sets of broadcast signaling corresponds to one of the N pieces of beam information.

In a possible design solution, the configuration information includes time-frequency resource information, and the time-frequency resource information indicates information about the time-frequency resources of the M sets of broadcast signaling.

In a possible design solution, the configuration information includes time-frequency resource information and time-frequency resource offset information, where the time-frequency resource information indicates a time-frequency resource of a $t^{th}$ set of broadcast signaling in the M sets of broadcast signaling; and the time-frequency resource offset information indicates a time-frequency offset of a time-frequency resource of a $u^{th}$ set of broadcast signaling in the M sets of broadcast signaling in comparison with the time-frequency resource of the $t^{th}$ set of broadcast signaling, t and u are any integers from 1 to M, and t and u are different.

Optionally, the time-frequency resource information includes at least one of the following: a bitmap or an index of at least one piece of signaling in the M sets of broadcast signaling.

Optionally, the time-frequency resource offset information includes at least one of the following: a bitmap or an index of at least one piece of signaling in the M sets of broadcast signaling.

In a possible design solution, any one of the M sets of broadcast signaling includes at least one of the following: a synchronization information block SSB, a system information block SIB, a master information block MIB, a bearer control resource set CORESET 0, a message Msg1, a message Msg2, a message Msg3, a message Msg4, or paging Paging.

In a possible design solution, the N pieces of beam information are associated with at least one of the following: a position of a first network device, a position of the second network device, panel information of the first network device, or panel information of the second network device.

Optionally, the transceiver module 901 is further configured to obtain energy that is of a downlink signal and that is fed back by a terminal device, and when the energy of the downlink signal is less than a preset energy threshold, the communication apparatus according to the fifth aspect indicates the second network device to use second beam information in the N pieces of beam information. The downlink signal is a signal received by the terminal device when the second network device uses first beam information in the N pieces of beam information, and the downlink signal is used by the terminal device to perform measurement and/or access. The second beam information is different from the first beam information.

Optionally, the downlink signal is carried in at least one of the following: a synchronization signal block SSB or a signaling state information-reference signal CSI-RS.

Optionally, the processing module 902 is further configured to: obtain, in a preset time interval, a quantity of uplink signals received from the terminal device; and when the quantity of uplink signals is less than a preset signal quantity threshold, indicate the second network device to use second beam information in the N pieces of beam information. The uplink signal is a signal received by the first network device when the second network device uses first beam information in the N pieces of beam information, and the uplink signal is used by the terminal device to request to access the first network device. The second beam information is different from the first beam information.

Optionally, the processing module 902 is further configured to: obtain energy of an uplink signal received from the terminal device, and when the energy of the uplink signal is less than a preset energy threshold, the communication apparatus according to the fifth aspect indicates the second network device to use second beam information in the N pieces of beam information. The uplink signal is a signal received by the first network device when the second network device uses first beam information in the N pieces of beam information, and the uplink signal is used by the terminal device to request to access the first network device. The second beam information is different from the first beam information.

Optionally, the uplink signal is carried in at least one of the following: a physical random access channel PRACH, a reference signal SRS, or a physical uplink shared channel PUSCH.

Optionally, the transceiver module 901 is further configured to send power scaling information to the second terminal device. The power scaling information indicates, to the second terminal device, an attenuation degree of transmit power of a data channel that has same time domain resources as the M sets of broadcast signaling, and the data channel is a channel for data transmission after the second terminal device accesses the first network device.

Optionally, the power scaling information is determined based on frequency domain bandwidth occupied by the M sets of broadcast signaling and frequency domain bandwidth occupied by the data channel that has the same time domain resources as the M sets of broadcast signaling.

In a possible design solution, the configuration information may be carried in at least one of the following: downlink control information DCI, radio control RRC information, a medium access control-control element MAC-CE, or a physical downlink shared channel PDSCH.

Optionally, the transceiver module 901 may include a sending module (not shown in FIG. 9) and a receiving module (not shown in FIG. 9). The sending module is configured to implement a sending function of the communication apparatus 900, and the receiving module is configured to implement a receiving function of the communication apparatus 900.

Optionally, the communication apparatus 900 may further include a storage module (not shown in FIG. 9). The storage module stores a program or instructions. When the processing module 902 executes the program or the instructions, the communication apparatus 900 is enabled to perform a function of the first network device in the method shown in FIG. 5 in the foregoing method.

It may be understood that the communication apparatus 900 may be a network apparatus, may be a chip (system) or another part or component that may be disposed in the network apparatus, or may be an apparatus including the network apparatus. This is not limited in this application. It may be understood that, if the communication apparatus 900 is a chip (system) disposed in a device, the transceiver module 901 may be an input/output interface of the chip (system), for example, an input/output circuit or a pin.

In addition, for technical effects of the communication apparatus 900, refer to the technical effects of the communication method shown in FIG. 5. Details are not described herein again.

In some embodiments, the communication apparatus 900 is applicable to the communication system shown in FIG. 4, and performs a function of the foregoing second network device.

For example, the transceiver module 901 is configured to receive configuration information from the first network device. The processing module 902 is configured to determine the corresponding N pieces of beam information on the M time-frequency resources based on the configuration information. The configuration information indicates a correspondence between time-frequency resources of M sets of broadcast signaling and N pieces of beam information, and M and N are integers greater than 1; and a time-frequency resource of each set of broadcast signaling in the time-frequency resources of the M sets of broadcast signaling corresponds to one of the N pieces of beam information.

In a possible design solution, any one of the M sets of broadcast signaling includes at least one piece of signaling, and the at least one piece of signaling is signaling for providing an access service for a terminal device.

In a possible design solution, the configuration information includes time-frequency resource information, and the time-frequency resource information indicates the time-frequency resources of the M sets of broadcast signaling.

In a possible design solution, the configuration information includes time-frequency resource information and time-frequency resource offset information, where the time-frequency resource information indicates a time-frequency resource of a $t^{th}$ set of broadcast signaling in the M sets of broadcast signaling; and the time-frequency resource offset information indicates a time-frequency offset of a time-frequency resource of a $u^{th}$ set of broadcast signaling in the M sets of broadcast signaling in comparison with the time-frequency resource of the $t^{th}$ set of broadcast signaling, t and u are any integers from 1 to M, and t and u are different.

In a possible design solution, the configuration information includes time-frequency resource information and time-frequency resource offset information, where the time-frequency resource information indicates a time-frequency resource of a $p^{th}$ piece of signaling in an $x^{th}$ set of broadcast signaling in the M sets of broadcast signaling; and the time-frequency resource offset information indicates a time-frequency offset of a time-frequency resource of a $q^{th}$ piece of broadcast signaling in the $x^{th}$ set of broadcast signaling in comparison with the time-frequency resource of the $p^{th}$ piece of broadcast signaling, x is any integer from 1 to M, and p and q are integers with different values.

Optionally, the time-frequency resource information includes at least one of the following: a bitmap or an index of at least one piece of signaling in the M sets of broadcast signaling.

Optionally, the time-frequency resource offset information includes at least one of the following: a bitmap or an index of at least one piece of signaling in the M sets of broadcast signaling.

In a possible design solution, any one of the M sets of broadcast signaling includes at least one of the following: a synchronization information block SSB, a system information block SIB, a master information block MIB, a bearer control resource set CORESET 0, a message Msg1, a message Msg2, a message Msg3, a message Msg4, or paging Paging.

In a possible design solution, the N pieces of beam information are associated with at least one of the following: a position of a first network device, a position of the second network device, panel information of the first network device, or panel information of the second network device.

In a possible design solution, the configuration information may be carried in at least one of the following: downlink control information DCI, radio control RRC information, a medium access control-control element MAC-CE, or a physical downlink shared channel PDSCH.

Optionally, the transceiver module 901 may include a sending module (not shown in FIG. 9) and a receiving module (not shown in FIG. 9). The sending module is configured to implement a sending function of the communication apparatus 900, and the receiving module is configured to implement a receiving function of the communication apparatus 900.

Optionally, the communication apparatus 900 may further include a storage module (not shown in FIG. 9). The storage module stores a program or instructions. When the processing module 902 executes the program or the instructions, the communication apparatus 900 is enabled to perform a function of the second network device in the communication method shown in FIG. 5.

It may be understood that the communication apparatus 900 may be a network apparatus, may be a chip (system) or another part or component that may be disposed in the network apparatus, or may be an apparatus including the network apparatus. This is not limited in this application. It may be understood that, if the communication apparatus 900 is a chip (system) disposed in a device, the transceiver module 901 may be an input/output interface of the chip (system), for example, an input/output circuit or a pin.

In addition, for technical effects of the communication apparatus 900, refer to the technical effects of the communication method shown in FIG. 5. Details are not described herein again.

FIG. 10 is a diagram 2 of a structure of a communication apparatus according to an embodiment of this application. For example, the communication apparatus may be a terminal, or may be a chip (system) or another part or component that can be disposed in the terminal. As shown in FIG. 10, the communication apparatus 1000 may include a processor 1001. Optionally, the communication apparatus 1000 may further include a memory 1002 and/or a transceiver 1003. The processor 1001 is coupled to the memory 1002 and the transceiver 1003, for example, may be connected through a communication bus.

The following specifically describes the components of the communication apparatus 1000 with reference to FIG. 10.

The processor 1001 is a control center of the communication apparatus 1000, and may be a processor, or may be a general term of a plurality of processing elements. For example, the processor 1001 is one or more central processing units (central processing units, CPUs), or may be an application-specific integrated circuit (application-specific integrated circuit, ASIC), or is configured as one or more integrated circuits that implement embodiments of this application, for example, one or more microprocessors (digital signal processors, DSPs), or one or more field programmable gate arrays (field programmable gate arrays, FPGAs).

Optionally, the processor 1001 may perform various functions of the communication apparatus 1000 by running or executing a software program stored in the memory 1002 and invoking data stored in the memory 1002, for example, perform the communication method shown in FIG. 4.

During specific implementation, in an embodiment, the processor 1001 may include one or more CPUs, for example, a CPU 0 and a CPU 1 shown in FIG. 10.

During specific implementation, in an embodiment, the communication apparatus 1000 may alternatively include a plurality of processors, for example, the processor 1001 and a processor 1004 in FIG. 10. Each of these processors may be a single-core processor (a single-CPU), or may be a multi-core processor (a multi-CPU). The processor herein may be one or more devices, circuits, and/or processing cores configured to process data (for example, computer program instructions).

The memory 1002 is configured to store a software program for executing the solutions of this application, and the processor 1001 controls the execution. For a specific implementation, refer to the foregoing method embodiments. Details are not described herein again.

Optionally, the memory 1002 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital versatile optical disc, a Blu-ray disc, and the like), a magnetic disk storage medium or another magnetic storage device, or any another medium that can be configured to carry or store expected program code in a form of instructions or a data structure and that can be accessed by a computer. However, this is not limited thereto. The memory 1002 and the processor 1001 may be integrated together, or may exist independently, and is coupled to the processor 1001 through an interface circuit (not shown in FIG. 10) of the communication apparatus 1000. This is not specifically limited in this embodiment of this application.

The transceiver 1003 is configured to communicate with another communication apparatus. For example, the communication apparatus 1000 is the terminal, and the transceiver 1003 may be configured to communicate with a network device or communicate with another terminal device. For another example, the communication apparatus 1000 is a network device, and the transceiver 1003 may be configured to communicate with a terminal or communicate with another network device.

Optionally, the transceiver 1003 may include a receiver and a transmitter (not separately shown in FIG. 10). The receiver is configured to implement a receiving function, and the transmitter is configured to implement a sending function.

Optionally, the transceiver 1003 and the processor 1001 may be integrated together, or may exist independently, and is coupled to the processor 1001 through an interface circuit (not shown in FIG. 10) of the communication apparatus 1000. This is not specifically limited in this embodiment of this application.

It may be understood that the structure of the communication apparatus 1000 shown in FIG. 10 does not constitute a limitation on the communication apparatus. An actual communication apparatus may include more or fewer parts than those shown in the figure, combine some parts, or have different part arrangement.

In addition, for technical effects of the communication apparatus 1000, refer to the technical effects of the method in the foregoing method embodiments. Details are not described herein again.

It should be understood that the processor in embodiments of this application may be a central processing unit (central processing unit, CPU), or the processor may be another generalpurpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The generalpurpose processor may be a microprocessor, or the processor may be any regular processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or a part of the foregoing embodiments may be implemented by using software, hardware (for example, a circuit), firmware, or any combination thereof. When the software is used to implement embodiments, the foregoing embodiments may be implemented completely or partially in a form of a computer program product. The computer program product includes one or more computer instructions or computer programs. When the computer instructions or the computer programs are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium that can be accessed by the computer, or a data storage device like a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: Only A exists, both A and B exist, and only B exists, where A and B may be singular or plural. In addition, the character "/" in this specification generally indicates an "or" relationship between the associated objects, but may alternatively indicate an "and/or" relationship. For details, refer to the context for understanding.

In this application, "at least one" means one or more, and "a plurality of" means two or more than two. "At least one of the following items (pieces)" or a similar expression thereof means any combination of these items, including any combination of single items (pieces) or plural items (pieces). For example, at least one item (piece) of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for convenient and brief description, for a specific operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are merely examples. For example, division into the units is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in a place, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   obtaining, by a first network device, configuration information, wherein the configuration information indicates a correspondence between time-frequency resources of M sets of broadcast signaling and N pieces of beam information, and M and N are integers greater than 1; and a time-frequency resource of each set of broadcast signaling in the time-frequency resources of the M sets of broadcast signaling corresponds to one of the N pieces of beam information; and
   sending, by the first network device, the configuration information to a second network device.

2. The method according to claim 1, wherein any one of the M sets of broadcast signaling comprises at least one piece of signaling, and the at least one piece of signaling is signaling for providing an access service for a terminal device.

3. The method according to claim 1, wherein the configuration information comprises time-frequency resource information, and the time-frequency resource information indicates the time-frequency resources of the M sets of broadcast signaling.

4. The method according to claim 1, wherein the configuration information comprises time-frequency resource information and time-frequency resource offset information, wherein the time-frequency resource information indicates a time-frequency resource of a $t^{th}$ set of broadcast signaling in the M sets of broadcast signaling; and the time-frequency resource offset information indicates a time-frequency offset of a time-frequency resource of a $u^{th}$ set of broadcast signaling in the M sets of broadcast signaling in comparison with the time-frequency resource of the $t^{th}$ set of broadcast signaling, t and u are any integers from 1 to M, and t and u are different.

5. The method according to claim 1, wherein the configuration information comprises time-frequency resource information and time-frequency resource offset information, wherein the time-frequency resource information indicates a time-frequency resource of a $p^{th}$ piece of signaling in an $x^{th}$ set of broadcast signaling in the M sets of broadcast signaling; and the time-frequency resource offset information indicates a time-frequency offset of a time-frequency resource of a $q^{th}$ piece of broadcast signaling in the $x^{th}$ set of broadcast signaling in comparison with the time-frequency resource of the $p^{th}$ piece of broadcast signaling, x is any integer from 1 to M, and p and q are integers with different values.

6. The method according to any one of claims 3 to 5, wherein the time-frequency resource information comprises at least one of the following: a bitmap or an index of at least one piece of signaling in the M sets of broadcast signaling.

7. The method according to claim 4 or 5, wherein the time-frequency resource offset information comprises at least one of the following: a bitmap or an index of at least one piece of signaling in the M sets of broadcast signaling.

8. The method according to any one of claims 1 to 7, wherein any one of the M sets of broadcast signaling comprises at least one of the following: a synchronization information block SSB, a system information block SIB, a master information block MIB, a bearer control resource set CORESET 0, a message Msg1, a message Msg2, a message Msg3, a message Msg4, or paging Paging.

9. The method according to any one of claims 1 to 8, wherein the N pieces of beam information are associated with at least one of the following: a position of the first network device, a position of the second network device, panel information of the first network device, or panel information of the second network device.

10. The method according to any one of claims 1 to 9, wherein the method further comprises:

obtaining, by the first network device, energy that is of a downlink signal and that is fed back by the terminal device, wherein the downlink signal is a signal received by the terminal device when the second network device uses first beam information in the N pieces of beam information, and the downlink signal is used by the terminal device to perform measurement and/or access; and
when the energy of the downlink signal is less than a preset energy threshold, indicating, by the first network device, the second network device to use second beam information in the N pieces of beam information, wherein the second beam information is different from the first beam information.

11. The method according to claim 10, wherein the downlink signal is carried in at least one of the following:
a synchronization signal block SSB or a channel state information-reference signal CSI-RS.

12. The method according to any one of claims 1 to 9, wherein the method further comprises:

obtaining, by the first network device in a preset time interval, a quantity of uplink signals received from the terminal device, wherein the uplink signal is a signal received by the first network device when the second network device uses first beam information in the N pieces of beam information, and the uplink signal is used by the terminal device to request to access the first network device; and
when the quantity of uplink signals is less than a preset signal quantity threshold, indicating, by the first network device, the second network device to use second beam information in the N pieces of beam information, wherein the second beam information is different from the first beam information.

13. The method according to any one of claims 1 to 9, wherein the method further comprises:

obtaining, by the first network device, energy of an uplink signal received from the terminal device, wherein the uplink signal is a signal received by the first network device when the second network device sends a signal by using first beam information in the N pieces of beam information, and the uplink signal is used by the terminal device to request to access the first network device; and
when the energy of the uplink signal is less than a preset energy threshold, indicating, by the first network device, the second network device to use second beam information in the N pieces of beam information, wherein the second beam information is different from the first beam information.

14. The method according to claim 12 or 13, wherein the uplink signal is carried in at least one of the following: a physical random access channel PRACH, a reference signal SRS, or a physical uplink shared channel PUSCH.

15. The method according to any one of claims 1 to 14, wherein the method further comprises:
sending, by the first network device, power scaling information to the terminal device, wherein the power scaling information indicates, to the terminal device, an attenuation degree of transmit power of a data channel that has same time domain resources as the M sets of broadcast signaling, and the data channel is a channel for data transmission after the terminal device accesses the first network device.

16. The method according to claim 15, wherein the power scaling information is determined based on frequency domain bandwidth occupied by the M sets of broadcast signaling and frequency domain bandwidth occupied by the data channel that has the same time domain resources as the M sets of broadcast signaling.

17. The method according to any one of claims 1 to 16, wherein the configuration information is carried in at least one of the following:
downlink control information DCI, radio control RRC information, a medium access control-control element MAC-CE, or physical downlink shared signaling PDSCH.

18. A communication method, comprising:

   receiving, by a second network device, configuration information from a first network device, wherein the configuration information indicates a correspondence between time-frequency resources of M sets of broadcast signaling and N pieces of beam information, and M and N are integers greater than 1; and a time-frequency resource of each set of broadcast signaling in the time-frequency resources of the M sets of broadcast signaling corresponds to one of the N pieces of beam information; and

   determining, by the second network device, the corresponding N pieces of beam information on the M time-frequency resources based on the configuration information.

19. The method according to claim 18, wherein any one of the M sets of broadcast signaling comprises at least one piece of signaling, and the at least one piece of signaling is signaling for providing an access service for a terminal device.

20. The method according to claim 18, wherein the configuration information comprises time-frequency resource information, and the time-frequency resource information indicates the time-frequency resources of the M sets of broadcast signaling.

21. The method according to claim 18, wherein the configuration information comprises time-frequency resource information and time-frequency resource offset information, wherein the time-frequency resource information indicates a time-frequency resource of a $t^{th}$ set of broadcast signaling in the M sets of broadcast signaling; and the time-frequency resource offset information indicates a time-frequency offset of a time-frequency resource of a $u^{th}$ set of broadcast signaling in the M sets of broadcast signaling in comparison with the time-frequency resource of the $t^{th}$ set of broadcast signaling, t and u are any integers from 1 to M, and t and u are different.

22. The method according to claim 18, wherein the configuration information comprises time-frequency resource information and time-frequency resource offset information, wherein the time-frequency resource information indicates a time-frequency resource of a $p^{th}$ piece of signaling in an $x^{th}$ set of broadcast signaling in the M sets of broadcast signaling; and the time-frequency resource offset information indicates a time-frequency offset of a time-frequency resource of a $q^{th}$ piece of broadcast signaling in the $x^{th}$ set of broadcast signaling in comparison with the time-frequency resource of the $p^{th}$ piece of broadcast signaling, x is any integer from 1 to M, and p and q are integers with different values.

23. The method according to any one of claims 20 to 22, wherein the time-frequency resource information comprises at least one of the following: a bitmap or an index of at least one piece of signaling in the M sets of broadcast signaling.

24. The method according to claim 21 or 22, wherein the time-frequency resource offset information comprises at least one of the following: a bitmap or an index of at least one piece of signaling in the M sets of broadcast signaling.

25. The method according to any one of claims 18 to 24, wherein any one of the M sets of broadcast signaling comprises at least one of the following: a synchronization information block SSB, a system information block SIB, a master information block MIB, a bearer control resource set CORESET 0, a message Msg1, a message Msg2, a message Msg3, a message Msg4, or paging Paging.

26. The method according to any one of claims 18 to 25, wherein the N pieces of beam information are associated with at least one of the following: a position of the first network device, a position of the second network device, panel information of the first network device, or panel information of the second network device.

27. The method according to any one of claims 18 to 26, wherein the configuration information is carried in at least one of the following:
   downlink control information DCI, radio resource control RRC information, a medium access control-control element MAC-CE, or a physical downlink shared channel PDSCH.

28. A communication apparatus, wherein the apparatus comprises one or more modules configured to perform the method according to any one of claims 1 to 27.

29. A communication apparatus, wherein the communication apparatus comprises a processor and a memory; and the memory is configured to store computer instructions, and when the processor executes the instructions, the communication apparatus is enabled to perform the communication method according to any one of claims 1 to 27.

30. A computer-readable storage medium, wherein the computer-readable storage medium comprises a computer program or instructions, and when the computer program or the instructions are run on a computer, the computer is enabled to perform the communication method according to any one of claims 1 to 27.

Beam
sweeping

FIG. 1

SSB #1a

FIG. 2

Reflection direction
of a beam

SSB #1a

A coverage
area increases

FIG. 3

First network
device

Second network
device

FIG. 4

```
┌─────────────────┐                              ┌─────────────────┐
│  First network  │                              │ Second network  │
│     device      │                              │     device      │
└─────────────────┘                              └─────────────────┘
┌───────────────────────┐
│  S501: The first      │
│ network device obtains│
│    configuration      │
│     information       │
└───────────────────────┘
        S502: The first network device
      sends the configuration information
        to the second network device
                                        ┌───────────────────────────────┐
                                        │  S503: The second network      │
                                        │  device determines             │
                                        │  corresponding N pieces of     │
                                        │  beam information on M time-    │
                                        │  frequency resources based on  │
                                        │  the configuration information │
                                        └───────────────────────────────┘
```

FIG. 5

SSB #2a

Reflection direction of a beam

A coverage area increases

FIG. 6

SSB #3j

Reflection direction of a beam

A coverage area increases

FIG. 7a

SSB #3k

Reflection
direction of a beam

A coverage
area increases

FIG. 7b

| Base station | IRS | UE 2 |
|---|---|---|

S801: The base station sends
configuration information to the IRS

S802: The base station transmits
a beam SSB #2a to the IRS

S803: The IRS reflects the SSB #2a
to the UE 2 at a time-frequency
resource position h by using beam
information 1

S804: The UE 2 sends a Msg1 to the
base station

Use the beam
information 1

S805: The base station sends a Msg2
to the UE 2

Use the beam
information 1

S806: The UE 2 sends a Msg3 to the
base station

Use the beam
information 1

S807: The base station sends a Msg4
to the UE 2

Use the beam
information 1

S808: After the UE 2 accesses the base
station, the base station sends power
scaling information to the UE 2

FIG. 8

FIG. 9

FIG. 10

## INTERNATIONAL SEARCH REPORT

| International application No. |
| --- |
| **PCT/CN2023/141718** |

**A. CLASSIFICATION OF SUBJECT MATTER**

H04W16/28(2009.01)i

According to International Patent Classification (IPC) or to both national classification and IPC

**B. FIELDS SEARCHED**

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, ENTXT, ENTXTC, 3GPP: 波束, 覆盖, 增强, 扩展, 能量, 切换, 时频资源, 增强, 智能反射面, 阈值, IRS, intelligent, reflecting, surface, beam?, broadcast?, cove+, resource?

**C. DOCUMENTS CONSIDERED TO BE RELEVANT**

| Category* | Citation of document, with indication, where appropriate, of the relevant passages | Relevant to claim No. |
| --- | --- | --- |
| X | CN 113905394 A (CHINA ACADEMY OF INFORMATION AND COMMUNICATIONS TECHNOLOGY) 07 January 2022 (2022-01-07) description, paragraph [0005], paragraphs [0098]-[0128], paragraph [0174], and paragraphs [0211]-[0213], and figure 6 | 1-9, 17-30 |
| A | CN 113905394 A (CHINA ACADEMY OF INFORMATION AND COMMUNICATIONS TECHNOLOGY) 07 January 2022 (2022-01-07) description, paragraph [0005], paragraphs [0098]-[0128], paragraph [0174], and paragraphs [0211]-[0213], and figure 6 | 10-16 |
| A | CN 113727363 A (CHINA ACADEMY OF INFORMATION AND COMMUNICATIONS TECHNOLOGY) 30 November 2021 (2021-11-30) entire document | 1-30 |
| A | CN 115225131 A (HUAWEI TECHNOLOGIES CO., LTD.) 21 October 2022 (2022-10-21) entire document | 1-30 |
| A | WO 2022217408 A1 (QUALCOMM INC.) 20 October 2022 (2022-10-20) entire document | 1-30 |

☑ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 March 2024** | **14 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/141718** |

### C. DOCUMENTS CONSIDERED TO BE RELEVANT

| Category* | Citation of document, with indication, where appropriate, of the relevant passages | Relevant to claim No. |
|---|---|---|
| A | WO 2022077165 A1 (HUAWEI TECHNOLOGIES CO., LTD.) 21 April 2022 (2022-04-21) entire document | 1-30 |

Form PCT/ISA/210 (second sheet) (July 2022)

**INTERNATIONAL SEARCH REPORT**
Information on patent family members

International application No.

**PCT/CN2023/141718**

| Patent document cited in search report | | | Publication date (day/month/year) | Patent family member(s) | | | Publication date (day/month/year) |
|---|---|---|---|---|---|---|---|
| CN | 113905394 | A | 07 January 2022 | None | | | |
| CN | 113727363 | A | 30 November 2021 | None | | | |
| CN | 115225131 | A | 21 October 2022 | None | | | |
| WO | 2022217408 | A1 | 20 October 2022 | KR | 20230169111 | A | 15 December 2023 |
| | | | | EP | 4324273 | A1 | 21 February 2024 |
| | | | | BR | 112023019985 | A2 | 14 November 2023 |
| WO | 2022077165 | A1 | 21 April 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211739370